# EUROPEAN PATENT APPLICATION

(11) **EP 2 899 231 A1**
(43) Date of publication of application: **29.07.2015**
(21) Application number: 14152073.4
(22) Date of filing: 22.01.2014
(51) Int. Cl.: C08L 79/08, C08G 73/10, C08G 65/40, C08L 71/00, C08K 7/02, C08K 7/06, C08K 7/00, C08K 3/38, C08K 3/00, C08K 13/04

(54) **Aerospace articles**

(71) Applicant: Solvay Specialty Polymers USA, LLC., Alpharetta, GA 30005-3914 (US)
(72) Inventor: Gopalakrishnan, Vijay, DUNWOODY, GA Georgia 30338 (US); El-Hibri, Mohammad Jamal, Atlanta, GA Georgia 30350 (US)
(74) Representative: Benvenuti, Federica

(57) **Abstract**

An aerospace article comprising at least one part made of a composition [composition (C)] comprising :

i. from 35 to 98 % by weight (wt. %) of a polymeric material and 2-65 wt. % of two fillers.

Polymer-composition comprises: from 25-85 wt. % of at least one polyetherimide polymer from 15-75 wt. % of at least one polyaryletherketone polymer.

Filler comprises:

from 5-95 wt. % of fibrous filler (such as Carbon fibers)

from 5-95 wt. % of at least one mineral filler (such as Boron Nitride).

## Description

### Field of invention

The present invention is related to an article suitable for use in aerospace applications comprising high performance mineral filled and reinforced polyetherimide (PEI)/polyaryletherketone (PAEK) polymer compositions. Said (PEI)/(PAEK) compositions are characterized by having improved mechanical properties, in particular having superior stiffness, over a broader range of temperature and good chemical resistance especially at high temperatures.

### Background of the invention

In the aerospace field, it is known that aerospace articles including high performance polymers must resist to very extreme conditions such as notably being exposed to a broad temperature range, from very cold temperatures high in the atmosphere to very high temperatures such as notably in engine systems being exposed in a prolonged fashion to high pressure or vacuum conditions, to ultraviolet radiation, to harsh chemicals such as notably aircraft wash and polish cleaners, degreasers, a range of paint strippers, hydraulic fluids, and fuels

Thus, in the development of aerospace articles including polymeric materials, the selection of said polymeric materials is of ultimate importance as it implies that said polymeric compositions need to possess some critical properties in order to resist the extreme conditions associated with the above mentioned severe operating conditions of high temperatures, harsh chemicals and other extreme conditions.

For example, semi-crystalline polyaryletherketone (PAEK) polymers could be regarded as such polymeric materials as they are known for their exceptional balance of technical properties, namely high melting point, good thermal stability, good stiffness and strength, good toughness and really excellent chemical resistance.

However the relatively low glass transition temperatures (Tg) of these semi-crystalline polyaryletherketone (PAEK) polymers limits their use at very high temperature. It is known that by the addition of reinforcing fillers to said (PAEK) polymers can mitigate this deficiency. Still, there is a need in the art for PAEK based formulations that can deliver higher mechanical properties above PAEK Tg than can be achieved with PAEK reinforcement alone.

On the other hand, polyetherimide (PEI) polymers are classified as high heat polymers and are attractive polymers in applications requiring high temperature resistance. Due to their high glass transition temperature and high melt viscosity, however, polyetherimides polymers can be difficult to process into finished products.

Certain polyetherimide (PEI)/polyaryletherketone (PAEK) compositions are already described in the prior art. For example, US 2007/066765 patent application describes phase separated blends of polyaryl ether ketones, polyaryl ketones, polyether ketones, polyether ether ketones and mixtures thereof with at least one polysulfone etherimide. Such blends are in particular characterized by having an improved load bearing capability at high temperature and a high crystallization temperature, especially at fast cooling rates.

WO 2010/080230 describes that by using the specific combination of a specific polyetherimide copolymer and a polyetheretherketone (PEEK), it is possible to make metalizable and moisture resistant compositions. Said polyetherimide copolymer is made from a monomer mixture comprising 3, 3' bisphenol-A dianhydride (BPADA), and 4, 4' - diaminodiphenyl sulfone (DDS). Said metalizable and moisture resistant compositions can optionally comprise a filler (i.e. from 0 - 30 weight percent based on the total weight of the composition). These moisture resistant compositions are known to survive lead free soldering temperatures after exposure to highly humid environments.

U.S. Pat. No. 5,580,918 also describes a specific type of polyimide resin compositions comprising 50 - 95 parts by weight of a specific type of polyimide resin and 50 - 5 parts by weight of a polyetheretherketone, being subjected to heat treatment at 250°C - 330°C. Said heat-treated polyimide resin compositions have *inter alia* excellent high-temperature physical properties. Fiber-reinforced polyimide resin compositions comprising 99 - 50 parts of the above described polyimide resin compositions and 1 - 50 parts by weight of fibers, in particular glass or carbon fibers are also disclosed, having improved heat resistance properties upon crystallization.

Although, there always remains a continuous need for improved compositions comprising polyetherimide (PEI)/polyaryletherketone (PAEK) polymeric materials for the manufacturing of articles suitable for use in aerospace applications, and wherein said compositions possesses the critical properties as mentioned above and thus features excellent mechanical properties, in particular having a superior stiffness over a broad range of temperature (i.e. from about 25°C up to 330°C), good processability, high chemical resistance, high thermal resistance and long term thermal stability, and wherein final articles comprising said compositions having all these improved properties, as mentioned above.

### Summary of invention

The present invention addresses the above detailed needs and relates to an aerospace article comprising at least one part made of a composition [composition (C)] comprising :
i. from 35 to 98 % by weight (wt. %) of a polymeric material, comprising, relative to the total weight of the composition (C) :
   - from 25 to 85 wt. % of at least one polyetherimide polymer [(PEI) polymer, herein after], relative to the total weight of the (PEI) polymer and the (PAEK) polymer,
   - from 15 to 75 wt. % of at least one polyaryletherketone polymer [(PAEK) polymer, herein after], relative to the total weight of the (PEI) polymer and the (PAEK) polymer; and
ii. from 2 to 65 wt. % of a filler comprising, relative to the total weight of the composition (C) :
   - from 5 to 95 wt. % of at least one fibrous filler, relative to the total weight of filler, and
   - from 5 to 95 wt. % of at least one mineral filler, relative to the total weight of filler.

As it will be explained in more detail in the specification, with reference notably to the working experiments, the Applicant has surprisingly found that the addition of the mineral filler to reinforced (PEI)/(PAEK) polymeric materials, as detailed above, is particularly effective in boosting the mechanical performance of the corresponding reinforced (PEI)/(PAEK) polymeric materials and that over a large temperature range up to very high temperature of about 330°C. The Applicant has found that combining a polymeric mixture of (PEI) polymer and (PAEK) polymer with the reinforcing filler and the mineral filler, as detailed above, provides for significantly improved properties over those expected by merely additive contributions of single components, clearly showing a synergetic effect, in particular in tensile and flexural modulus so as to render articles made from the composition (C) particularly adapted for use in the in aerospace applications, in particular in the extreme conditions of high temperature, high pressure and harsh chemicals.

Another object of the present invention is the composition (C), as described above.

### The aerospace article

To the purposes of the invention, the term "aerospace article" is intended to denote any article that is designed to conveniently be used in aerospace vehicles, in particular in extreme conditions of high temperature, high pressure and harsh chemicals.

Representative examples of aerospace vehicles, but not limited to, include airplanes, helicopters, missiles, space shuttle, communications satellites and space stations.

For the sake of clarity, the term "part of an aerospace article" is intended to denote a piece or portion which is combined with others to make up the whole aerospace article. The external coating of an aerospace article falls thus within this scope. Thus, the at least one part of the aerospace article according to the present invention, can be a coating.

An aerospace vehicle is generally composed of a body, i.e. a fuselage, wings, control surfaces, such as notably light control surfaces, radomes, fairings, engine nacelles and an aircraft interior.

As non limitative examples of aerospace articles useful in the present invention mention can be made of wing components such as notably wing boxes, ribs and spars; fairings such as notably wing to body, body to body, leg, flap track, tip fairings; doors; engine cowls; spoilers; panels such as notably floor panels, spoiler shroud top panels, access panels, bay top panels; frames such as notably aircraft window frames; rudder actuators; interior craft components such as notably seats, overhead bins, sidewall panels, ceiling panels, floor boards, lavatories, galleys, partitions, cargo liners such as notably bin and floor board liners, personal service units (PSUs), window shades.

Typical wing components have been described by way of example in WO 2006/067403 A1 and EP 2 418 148 A2, the entire disclosure of those are incorporated herein by reference.

Typical wing to body fairings have been described by way of example in EP 2 415 664 A2, the entire disclosure is incorporated herein by reference.

Typical engine cowls have been described by way of example in U.S. Pat. No. 2,550,337, the entire disclosure is incorporated herein by reference.

Typical access panels have been described by way of example in EP 0 170 300 B1, the entire disclosure is incorporated herein by reference.

Representative examples of aerospace article parts, but not limited to, include notably interior parts, fitting parts; such as seals, in particular sealing rings, preferably backup seal rings, storage bin fittings, side guide fittings; fasteners and the like; snap fit parts; mutually moveable parts; functional elements, operating elements; tracking elements; adjustment elements; carrier elements; frame elements such as notably frame gussets; supporting elements such as notably wing fairing supports, flange supports, antenna supports; films; switches; connectors, in particular electrical connectors; connecting elements such as notably shear ties; bearings; torque tube pans; handle boxes and intercostals.

In one preferred embodiment, the at least one part of the aerospace article according to the present invention, is advantageously a seal, a fastener or an electrical connector.

Typical shear ties have been described by way of example in in U.S. Pat. No. 2008/0128554 A1, the entire disclosure is incorporated herein by reference.

Typical fasteners have been described by way of example in WO 2010/112435, the entire disclosure of those are incorporated herein by reference, and include, but not limited to, threaded fasteners such as bolts, nuts, screws, headless set screws, scrivets, threaded studs and threaded bushings, and unthreaded fastener, such as notably pins, retaining rings, rivets, brackets and fastening washers and the like.

Sealing of components of aerospace articles is important and it can be said that seals are used in all types of aerospace articles, as well as those used in parts of aerospace articles. Thus the seals need to resist to these extreme conditions, as mentioned above, in substantially indefinite time. It is worthwhile mentioning that seals besides electronics can be considered as the most vulnerable parts of aerospace articles.

In one embodiment of the present invention, the at least part of an aerospace article is a seal wherein said seal is selected from a group consisting of a metal seal, an elastomeric seal, a metal-to-metal seal and an elastomeric and metal-to-metal seal.

Representative examples of seals, but not limited to, include seal rings such as notably C-rings, E-rings, O-rings, U-rings, spring energized C-rings, backup rings and the like; fastener seals; piston seals, gask-O-seals; integral seals, labyrinth seals.

In a particularly preferred embodiment, the at least one part of the aerospace article according to the present invention, is a seal ring, preferably a backup seal ring.

The weight of composition (C), based on the total weight of aerospace article, is usually above 1 %, above 5 %, above 10 %, preferably above 15 %, above 20 %, above 30 %, above 40 %, above 50 %, above 60 %, above 70 %, above 80 %, above 90 %, above 95 %, above 99 %.

The aerospace article may consist of one part, i.e. it is a single-component article. Then, the single part preferably consists of the composition (C).

Alternatively, the aerospace article may consist of several parts. The case being, either one part or several parts of the aerospace article may consist of the composition (C). When several parts of the aerospace article consist of the composition (C), each of them may consist of the very same composition (C); alternatively, at least two of them may consist of different the compositions (C), in accordance with the invention.

### Composition (C)

In a preferred embodiment of the present invention, the total weight of the polymeric material, based on the total weight of the composition (C), is advantageously equal to or above 40 %, preferably equal to or above 45 %; more preferably equal to or above 50 %, even more preferably equal to or above 55 %, and most preferably equal to or above 60 %.

The total weight of the total weight of the polymeric material, based on the total weight of the composition (C), is advantageously equal to or below 95 %, preferably equal to or below 90 %, more preferably equal to or below 80 %, and even more preferably equal to or below 75 %.

Excellent results were obtained when the composition (C) comprised the polymeric material in an amount of 50 - 70 wt. %, based on the total weight of the composition (C).

In the rest of the text, the expression "(PEI) polymer" is understood, for the purposes of the present invention, both in the plural and the singular, that is to say that the inventive composition may comprise one or more than one (PEI) polymer. It is understood that the same applies for the expressions "(PAEK) polymer", the "reinforcing filler" and the "mineral filler".

### (PEI) polymer

For the purpose of the present invention, a polyetherimide (PEI) polymer is intended to denote any polymer of which more than 50 wt. % of the recurring units are recurring units (R1) comprising at least one aromatic ring, at least one imide group, as such and/or in its amic acid form, and at least one ether group.

Recurring units (R1) may optionally further comprise at least one amide group which is not included in the amic acid form of an imide group.

The recurring units (R1) are advantageously selected from the group consisting of following formulae (I), (II), (III), (IV) and (V), and mixtures thereof : 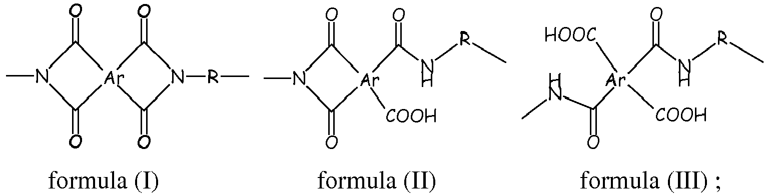 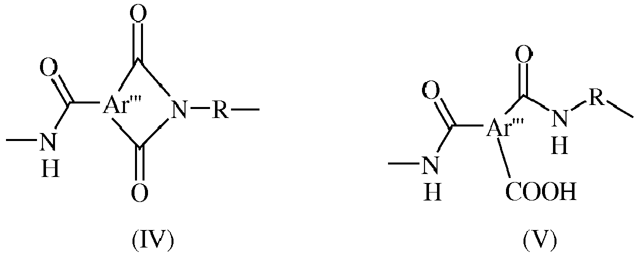 wherein
- Ar is a tetravalent aromatic moiety and is selected from the group consisting of a substituted or unsubstituted, saturated, unsaturated or aromatic monocyclic and polycyclic group having 5 to 50 carbon atoms ;
- Ar'" is a trivalent aromatic moiety and is selected from the group consisting of a substituted or unsubstituted, saturated, unsaturated or aromatic monocyclic and polycyclic group having 5 to 50 carbon atoms and
- R is selected from the group consisting of substituted or unsubstituted divalent organic radicals, and more particularly consisting of (a) aromatic hydrocarbon radicals having 6 to 20 carbon atoms and halogenated derivatives thereof ; (b) straight or branched chain alkylene radicals having 2 to 20 carbon atoms ; (c) cycloalkylene radicals having 3 to 20 carbon atoms, (d) divalent radicals of the general formula (VI) : 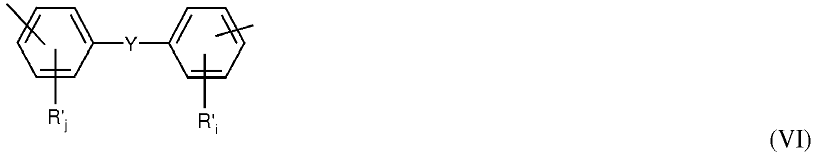 wherein Y represents a direct bond or a group selected from the group consisting of alkylenes of 1 to 6 carbon atoms, in particular -C(CH₃)₂ and -Cₙ H₂ₙ-(n being an integer from 1 to 6) ; perfluoroalkylenes of 1 to 6 carbon atoms, in particular -C(CF₃)₂ and -Cₙ F₂ₙ-(n being an integer from 1 to 6) ; cycloalkylenes of 4 to 8 carbon atoms ; alkylidenes of 1 to 6 carbon atoms ; cycloalkylidenes of 4 to 8 carbon atoms ; -O- ; -S- ; -C(O)- ; -SO₂- ; -SO-, and R' is selected from the group consisting of : hydrogen, halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium and i and j equal or different from each other, are independently 0, 1, 2, 3 or 4, or Y is a group of the formula O-Ar¹-O ; and wherein Ar¹ is selected from the group consisting of those complying with following formulae (VII) to (XIII), and mixtures thereof : 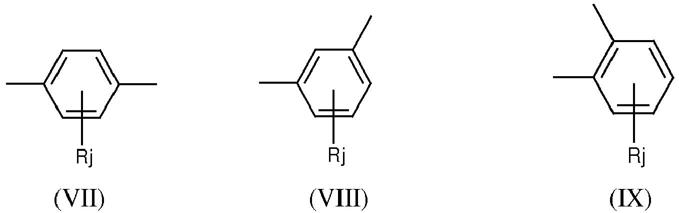 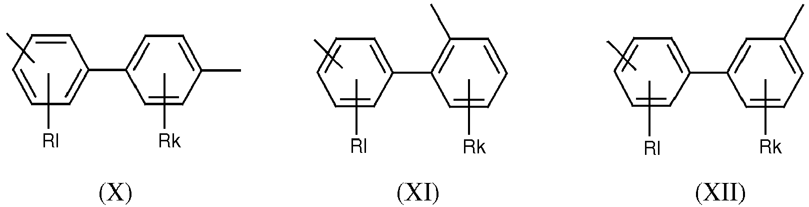 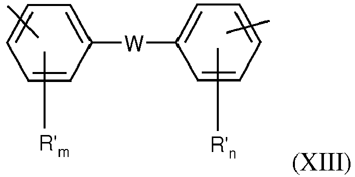 wherein R and R', equal or different from each other, are independently selected from the group consisting of : hydrogen, halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium and j, k, l, n and m equal or different from each other, are independently 0, 1, 2, 3 or 4, and W is selected from the group consisting of alkylenes of 1 to 6 carbon atoms, in particular -C(CH₃)₂ and -CₙH₂ₙ- (with n being an integer from 1 to 6) ; perfluoroalkylenes of 1 to 6 carbon atoms, in particular -C(CF₃)₂ and -Cₙ F₂ₙ-(with n being an integer from 1 to 6) ; cycloalkylenes of 4 to 8 carbon atoms ; alkylidenes of 1 to 6 carbon atoms ; cycloalkylidenes of 4 to 8 carbon atoms ; -O- ; -S- ; -C(O)- ; -SO₂- ; and -SO-,
   with the provisio that at least one of Ar, Ar"' and R comprise at least one ether group wherein said ether group is present in the polymer chain backbone.

Preferably, Ar is selected from the group consisting of those complying with the following formulae : 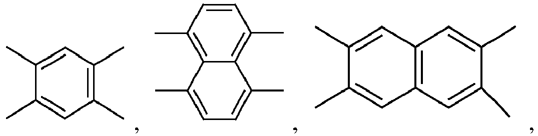 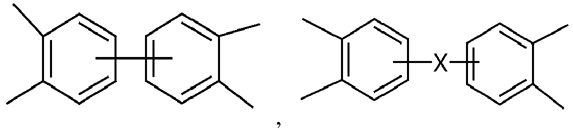 wherein X is a divalent moiety, having divalent bonds in the 3,3', 3,4', 4,3" or the 4,4' positions and is selected from the group consisting of alkylenes of 1 to 6 carbon atoms, in particular -C(CH₃)₂ and -Cₙ H₂ₙ- (n being an integer from 1 to 6) ; perfluoroalkylenes of 1 to 6 carbon atoms, in particular -C(CF₃)₂ and -Cₙ F₂ₙ- (n being an integer from 1 to 6) ; cycloalkylenes of 4 to 8 carbon atoms ; alkylidenes of 1 to 6 carbon atoms ; cycloalkylidenes of 4 to 8 carbon atoms ; -O- ; -S- ; -C(O)- ; -SO₂- ; -SO-, or X is a group of the formula O-Ar"-O ; and wherein Ar" is selected from the group consisting of those complying with following formulae (VII) to (XIII), and mixtures thereof : 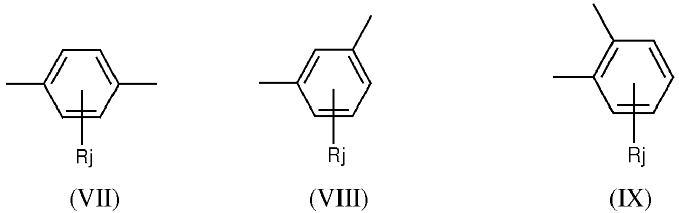 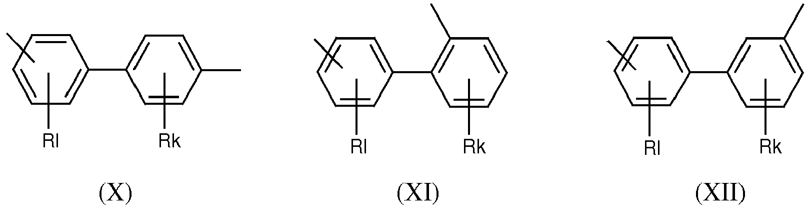 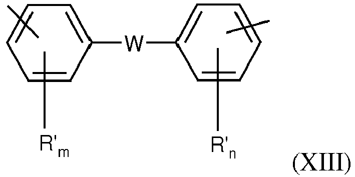 wherein R and R', equal or different from each other, are independently selected from the group consisting of : hydrogen, halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium and j, k, l, n and m equal or different from each other, are independently 0, 1, 2, 3 or 4, and W is selected from the group consisting of alkylenes of 1 to 6 carbon atoms, in particular -C(CH₃)₂ and -CₙH₂ₙ- (with n being an integer from 1 to 6) ; perfluoroalkylenes of 1 to 6 carbon atoms, in particular -C(CF₃)₂ and -Cₙ F₂ₙ-(with n being an integer from 1 to 6) ; cycloalkylenes of 4 to 8 carbon atoms ; alkylidenes of 1 to 6 carbon atoms ; cycloalkylidenes of 4 to 8 carbon atoms ; -O- ; -S- ; -C(O)- ; -SO₂- ; and -SO-.

Preferably, Ar"' is selected from the group consisting of those complying with the following formulae : 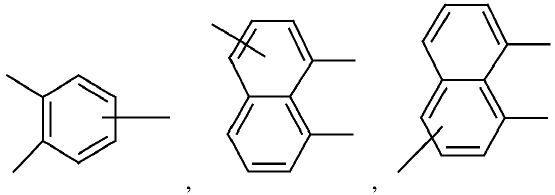 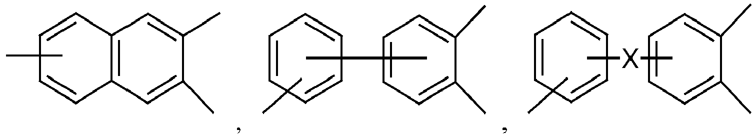 wherein X has the same meaning as defined above.

In one specific embodiment, the recurring units (R1) are selected from the group consisting of units of formula (XIV) in imide form, of corresponding units in amic acid forms of formulae (XV) and (XVI), and of mixtures thereof : 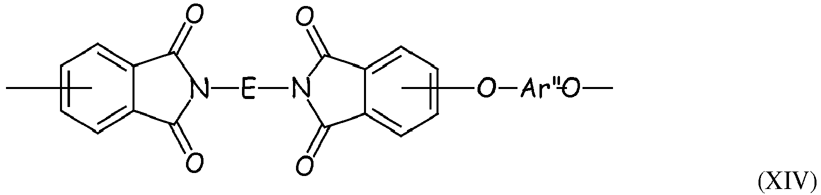 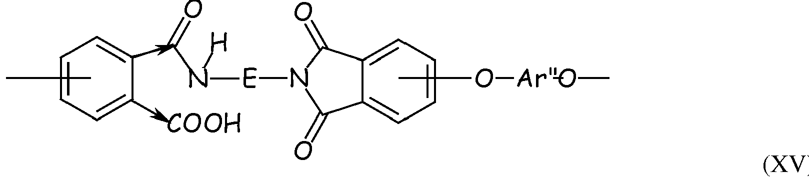 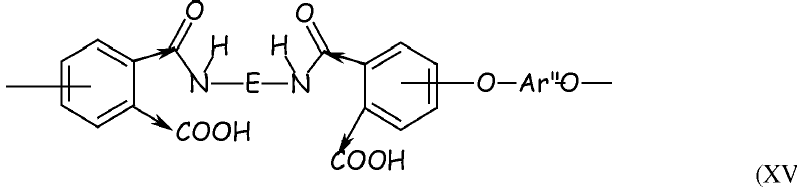 wherein :
- the → denotes isomerism so that in any recurring unit the groups to which the arrows point may exist as shown or in an interchanged position ;
- Ar" is selected from the group consisting of those complying with following formulae (VII) to (XIII) 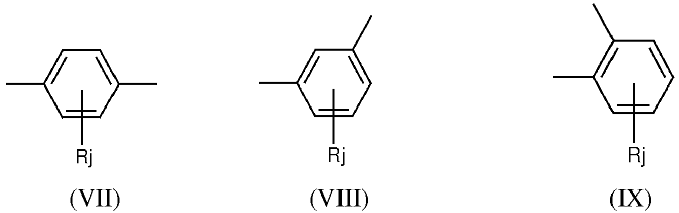 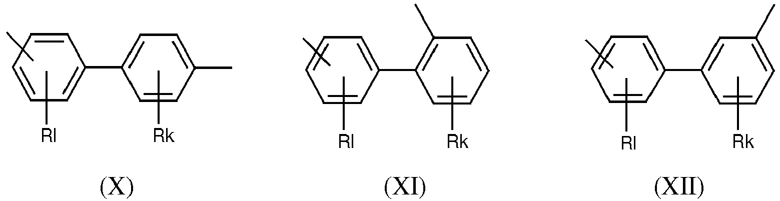 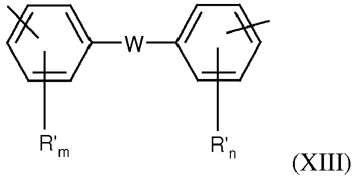 wherein R and R', equal or different from each other, are independently selected from the group consisting of : hydrogen, halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium and j, k, l, n and m equal or different from each other, are independently 0, 1, 2, 3 or 4, and W is selected from the group consisting of alkylenes of 1 to 6 carbon atoms, in particular -C(CH₃)₂ and -CₙH₂ₙ- (n being an integer from 1 to 6) ; perfluoroalkylenes of 1 to 6 carbon atoms, in particular -C(CF₃)₂ and -Cₙ F₂ₙ-(n being an integer from 1 to 6) ; cycloalkylenes of 4 to 8 carbon atoms ; alkylidenes of 1 to 6 carbon atoms ; cycloalkylidenes of 4 to 8 carbon atoms ; -O- ; -S- ; -C(O)- ; -SO₂- ; and -SO- ;
- E is selected from the group consisting of -CₙH₂ₙ- (n being an integer from 1 to 6), divalent radicals of the general formula (VI), as defined above, and those complying with formulae (XVII) to (XXII) 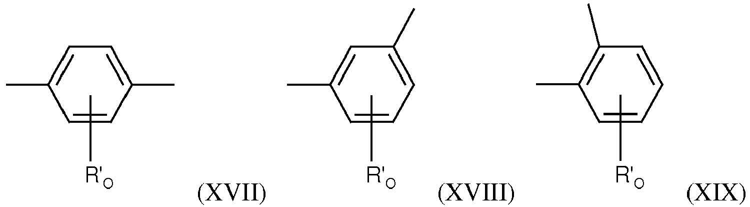 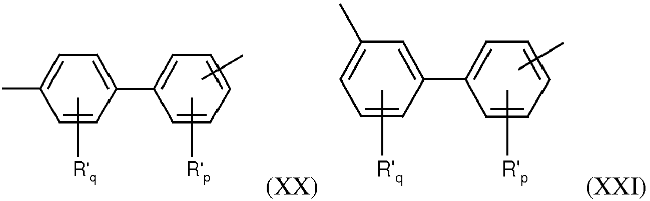 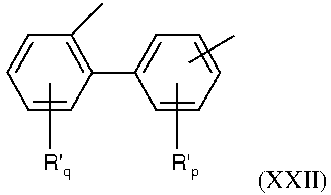 wherein R' is selected from the group consisting of : hydrogen, halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium and o, p, and q equal or different from each other, are independently 0, 1, 2, 3 or 4,

Preferably, E is selected from the group consisting of those complying with formulae (XVII) to (XIX), as defined above, and a divalent radical of the general formula (VI) wherein Y is SO₂, more preferably, E is selected from the group consisting of unsubstituted m-phenylene and unsubstituted p-phenylene, a divalent radical of formula (VI'), as shown below : 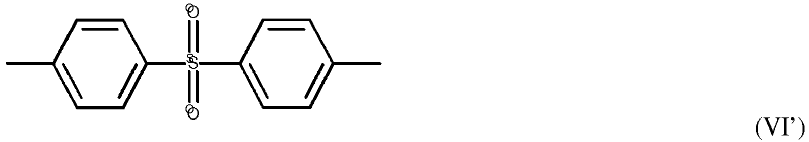 and mixtures thereof.

Preferably, Ar" is of the general formula (XIII), as detailed above ; more preferably, Ar" is

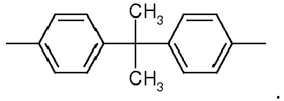

The polyetherimides wherein the recurring units (R1) are recurring units of formula (XIV) as such, in imide form, and/or in amic acid forms [formulae (XV) and (XVI)], as defined above, may be prepared by any of the methods well-known to those skilled in the art including the reaction of any aromatic bis(ether anhydride)s of the formula 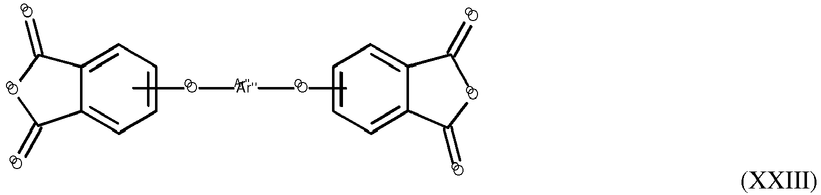 where Ar" is as defined hereinbefore, with a diamino compound of the formula H₂N-E-NH₂ (XXIV) where E is as defined hereinbefore. In general, the reactions can be advantageously carried out employing well-known solvents, e.g., o-dichlorobenzene, m-cresol/toluene, N,N-dimethylacetamide, etc., in which to effect interaction between the dianhydrides and diamines, at temperatures of from about 20°C to about 250°C.

Alternatively, these polyetherimides can be prepared by melt polymerization of any dianhydrides of formula (XXIII) with any diamino compound of formula (XXIV) while heating the mixture of the ingredients at elevated temperatures with concurrent intermixing.

The aromatic bis(ether anhydride)s of formula (XXIII) include, for example :
2,2-bis[4-(2,3-dicarboxyphenoxy)phenyl]propane dianhydride ;
4,4'-bis(2,3-dicarboxyphenoxy)diphenyl ether dianhydride ;
1,3-bis(2,3-dicarboxyphenoxy)benzene dianhydride ;
4,4'-bis(2,3-dicarboxyphenoxy)diphenyl sulfide dianhydride ;
1,4-bis(2,3-dicarboxyphenoxy)benzene dianhydride ;
4,4'-bis(2,3-dicarboxyphenoxy)benzophenone dianhydride ;
4,4'-bis(2,3-dicarboxyphenoxy)diphenyl sulfone dianhydride ;
2,2-bis[4 (3,4-dicarboxyphenoxy)phenyl]propane dianhydride ;
4,4'-bis(3,4-dicarboxyphenoxy)diphenyl ether dianhydride ;
4,4'-bis(3,4-dicarboxyphenoxy)diphenyl sulfide dianhydride ;
1,3-bis(3,4-dicarboxyphenoxy)benzene dianhydride ;
1,4-bis(3,4-dicarboxyphenoxy)benzene dianhydride ;
4,4'-bis(3,4-dicarboxyphenoxy)benzophenone dianhydride ;
4-((2,3-dicarboxyphenoxy)-4'-(3,4-dicarboxyphenoxy)diphenyl-2,2-propane dianhydride ; etc. and mixtures of such dianhydrides.

The organic diamines of formula (XXIV) include, for example, m-phenylenediamine, p-phenylenediamine, 2,2-bis(p-aminophenyl)propane, 4,4'-diaminodiphenyl-methane, 4,4'-diaminodiphenyl sulfide, 4,4'-diamino diphenyl sulfone, 4,4'-diaminodiphenyl ether, 1,5-diaminonaphthalene, 3,3'-dimethylbenzidine, 3,3'-dimethoxybenzidine, and mixtures thereof.

In a preferred embodiment, the organic diamines of formula (XXIV) is chosen from a group selected from m-phenylenediamine and p-phenylenediamine, 4,4'-diamino diphenyl sulfone, and mixture thereof.

In another preferred specific embodiment, the recurring units (R1) are selected from the group consisting of units of formula (XXV) in imide form, of corresponding units in amic acid forms of formulae (XXVI) and (XXVII), and of mixtures thereof : 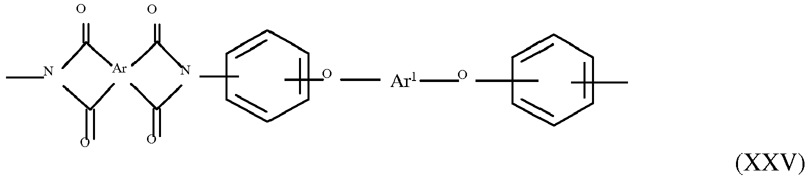 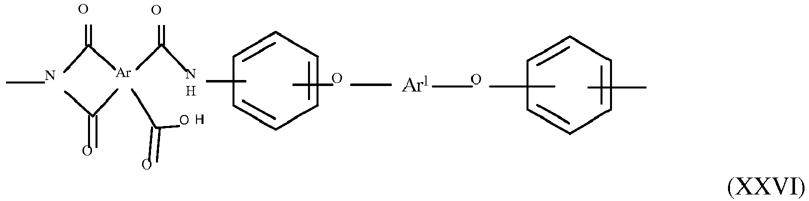 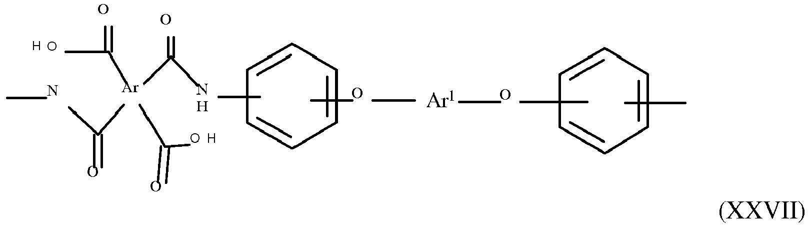 wherein Ar and Ar¹ have the same meaning as defined above.

Preferably, Ar is selected from the group consisting of those complying with the following formulae :

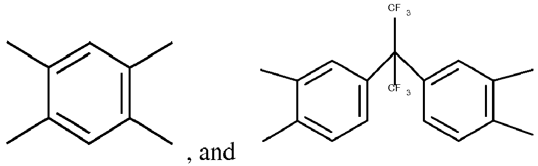

Preferably, Ar¹ is selected from the group consisting of those complying with the following formulae :

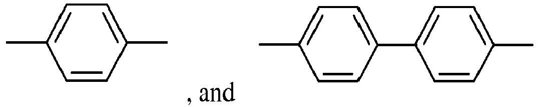

The polyetherimides wherein the recurring units (R1) are recurring units of formula (XXV) as such, in imide form, and/or in amic acid forms [formulae (XXVI) and (XXVIII)], as defined above, may be prepared by any of the methods well-known to those skilled in the art including the reaction of any aromatic bis(ether anhydride)s of the formula 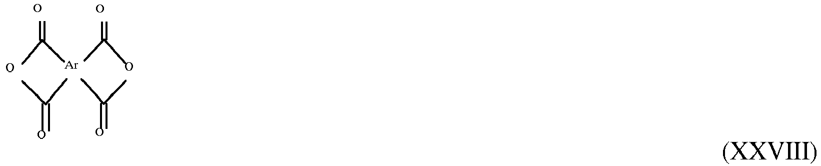 where Ar is as defined hereinbefore, with a diamino compound of the formula 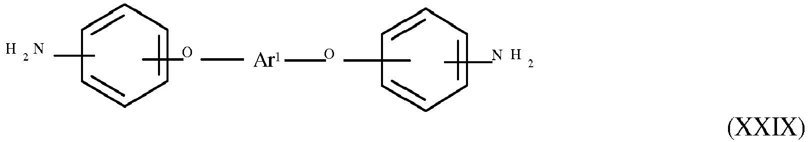 where Ar¹ is as defined hereinbefore. In general, the reactions can be advantageously carried out employing well-known solvents, e.g., o-dichlorobenzene, m-cresol/toluene, N,N-dimethylacetamide, etc., in which to effect interaction between the dianhydrides and diamines, at temperatures of from about 20°C to about 250°C.

Alternatively, these polyetherimides can be prepared by melt polymerization of any dianhydrides of formula (XXVIII) with any diamino compound of formula (XXIX) while heating the mixture of the ingredients at elevated temperatures with concurrent intermixing.

The aromatic bis(ether anhydride)s of formula (XXVIII) include, for example : 1,2,4,5-benzenetetracarboxylic anhydride; 3,3',4,4'-biphenyltetracarboxylic dianhydride; 2,2',3,3'-biphenyltetracarboxylic dianhydride, 2,2-bis(3,4-dicarboxyphenyl)propane dianhydride, 2,2-bis(2,3-dicarboxyphenyl)propane dianhydride, 1,1-(2,3-dicarboxyphenyl)ethane dianhydride, bis(2,3-dicarboxyphenyl)methane dianhydride and bis(3,4-dicarboxyphenyl)methane dianhydride, bis(3,4-dicarboxyphenyl)ether dianhydride and bis(3,4-dicarboxyphenyl)sulfone dianhydride ; etc. and mixtures of such dianhydrides.

In a preferred embodiment, the aromatic bis(ether anhydride)s of formula (XXVIII) is 1,2,4,5-benzenetetracarboxylic anhydride.

The organic diamines of formula (XXIX) include, for example, 4,4'-bis(3-aminophenoxy)biphenyl, 4,4'-bis(3-aminophenoxy)-3-methylbiphenyl, 4,4'-bis(3-aminophenoxy)-3,3'-dimethylbiphenyl, 4,4'-bis(3-aminophenoxy)-3,5-dimethylbiphenyl, 4,4'-bis(3-aminophenoxy)-3,3', 5,5'-tetramethylbiphenyl, 4,4'-bis(3-aminophenoxy)-3,3'dichlorobiphenyl, 4,4'-bis(3-aminophenoxy)-3,5-dichlorobiphenyl, 4,4'-bis(3-aminophenoxy)-3,3'-5,5'-tetrachlorobiphenyl, 4,4'-bis(3-aminophenoxy)-3,3'dibromobiphenyl, 4,4'-bis(3-aminophenoxy)-3,5-dibromobiphenyl and 4,4'-bis(3-aminophenoxy)-3,3', 5,5'-tetrabromobiphenyl, and mixtures thereof.

In a preferred embodiment, the organic diamines of formula (XXIX) is chosen from a group selected from 4,4'-bis(3-aminophenoxy)biphenyl and 4,4'-bis(3-aminophenoxy)-3-methylbiphenyl and mixture thereof.

In a most preferred embodiment, the recurring units (R1) are recurring units selected from the group consisting of those of formula (XXX) in imide form, their corresponding amic acid forms of formulae (XXXI) and (XXXII), and mixtures thereof : 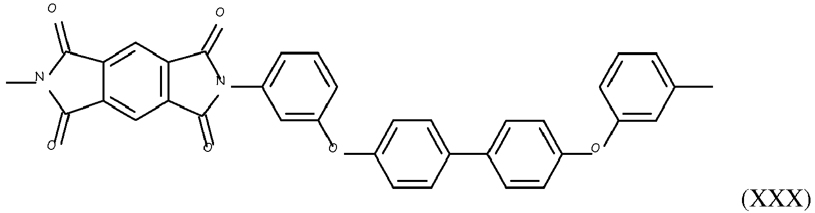 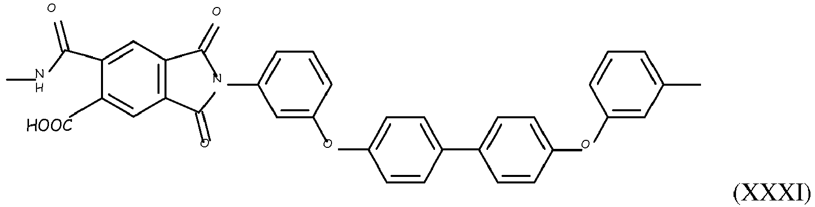 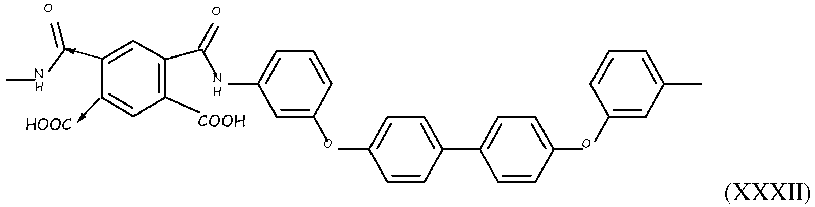 wherein in formulae (XXXII) the → denotes isomerism so that in any recurring unit the groups to which the arrows point may exist as shown or in an interchanged position.

Preferably more than 75 % by moles, more preferably more than 85 % by moles and even more preferably more than 90 % by moles of the recurring units of the (PEI) polymer are recurring units (R1).

Still, it is generally preferred that substantially all recurring units of the (PEI) polymer are recurring units (R1), as detailed above; chain defects, or very minor amounts of other units might be present, being understood that these latter do not substantially modify the properties of (R1).

Still, it is generally preferred that all the recurring units of the (PEI) polymer are recurring units (R1).

In a preferred embodiment of the present invention, more than 75 % by moles, more preferably more than 85 % by moles, more preferably more than 90 % by moles, more preferably more than 99 % by moles, of the recurring units of the (PEI) polymer are recurring units selected from the group consisting of those in imide form of formula (XXX), their corresponding amic acid forms of formulae (XXXI) and (XXXII), and mixtures thereof.

Still, it is generally preferred that substantially all recurring units of the (PEI) polymer are recurring units selected from the group consisting of those in imide form of formula (XXX), their corresponding amic acid forms of formulae (XXXI) and (XXXII), and mixtures thereof, chain defects, or very minor amounts of other units might be present, being understood that these latter do not substantially modify the properties of said recurring units.

Such aromatic polyimides are notably commercially available from Mitsui Chemicals, Inc. as AURUM^{®} polyimides.

The (PEI) polymer may be notably a homopolymer, a random, alternate or block copolymer.

The compositions can comprise one and only one (PEI). Alternatively, they can comprise two, three, or even more than three (PEI).

Generally, (PEI) polymers useful in the present invention have advantageously a melt flow rate (MFR) ranging from 0.1 to 40 grams per 10 minute, as measured according to ASTM D1238 at 337°C and under a load of 6.6 kg, preferably ranging from 4 to 25 grams per 10 minute, as measured according to ASTM D1238 at 337°C and under a load of 6.6 kg.

Generally, (PEI) polymers useful in the present invention have a degree of crystallinity of at least 5 %, preferably of at least 7 % and more preferably of at least 8 %.

The degree of crystallinity can be determined by different methods known in the art such as notably Wide Angle X-Ray diffraction (WAXD) and Differential Scanning Calorimetry (DSC).

In a specific embodiment, the (PEI) polymer has advantageously a weight average molecular weight (Mw) of 10,000 to 150,000 grams per mole (g/mole), as measured by gel permeation chromatography, using a polystyrene standard. Such (PEI) polymers typically have an inherent viscosity greater than 0.2 deciliters per gram (dl/g), beneficially 0.35 to 0.7 dl/g measured in m-cresol at 25°C.

As already mentioned above, the presence of the (PEI) polymer, as detailed above, is particularly effective in increasing the modulus of the composition (C) and that above the Tg of (PAEK) polymer and at higher temperature, as high as about 330°C.

The weight of the (PEI) polymer in the polymeric material, based on the total weight of the (PEI) polymer and the (PAEK) polymer, is advantageously equal to or above 30 %, preferably equal to or above 40 %, more preferably equal to or above 50 %, even more preferably equal to or above 55 %, most preferably equal to or above 60 %. On the other hand, the weight of the (PEI) polymer, based on the total weight of the (PEI) polymer and the (PAEK) polymer, is advantageously equal to or below 80 %, preferably equal to or below 75 %, more preferably equal to or below 70 %, even more preferably equal to or below 65 %.

Very good results were obtained when the polymeric material comprised the (PEI) polymer in an amount of 40 - 75 wt. % based on the total weight of the (PEI) polymer and the (PAEK) polymer.

Excellent results were obtained when the polymeric material comprised the (PEI) polymer in an amount of 50 - 70 wt. % based on the total weight of the (PEI) polymer and the (PAEK) polymer.

### The polyaryletherketone polymer

Within the context of the present invention the mention "at least one polyaryletherketone polymer [(PAEK) polymer]" is intended to denote one or more than one (PAEK) polymer. Mixtures of (PAEK) polymer can be advantageously used for the purposes of the invention.

In the rest of the text, the expressions "(PAEK) polymer" are understood, for the purposes of the present invention, both in the plural and the singular, that is to say that the inventive composition may comprise one or more than one (PAEK) polymer.

For the purpose of the invention, the term "polyaryletherketone (PAEK)" is intended to denote any polymer, comprising recurring units, more than 50 % moles of said recurring units are recurring units (R_{PAEK}) comprising a Ar-C(O)-Ar' group, with Ar and Ar', equal to or different from each other, being aromatic groups. The recurring units (R_{PAEK}) are generally selected from the group consisting of formulae (J-A) to (J-O), herein below : 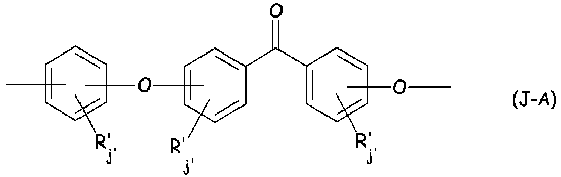 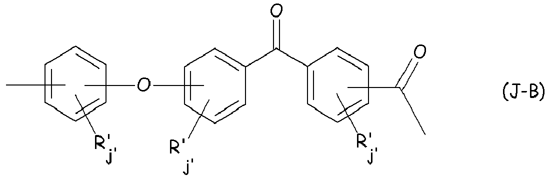 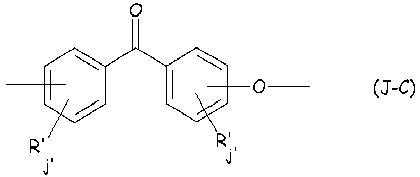 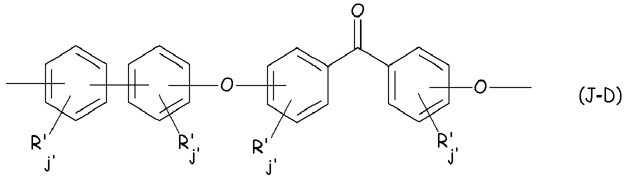 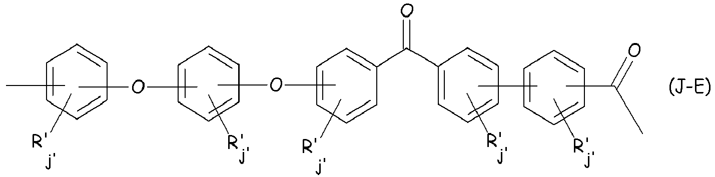 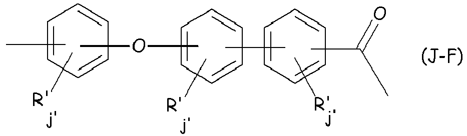 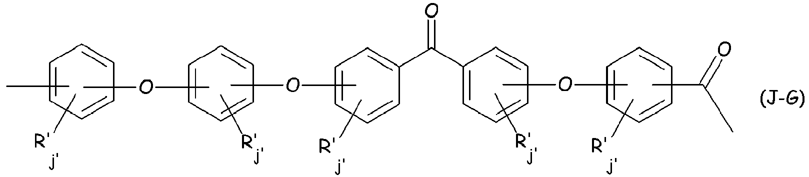 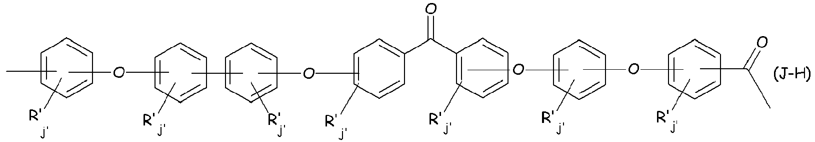 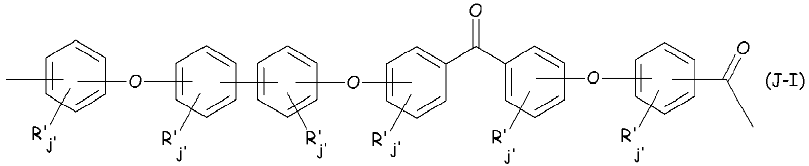 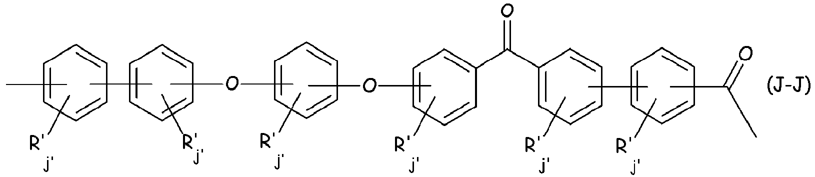 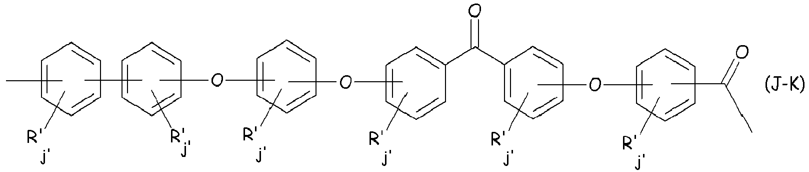 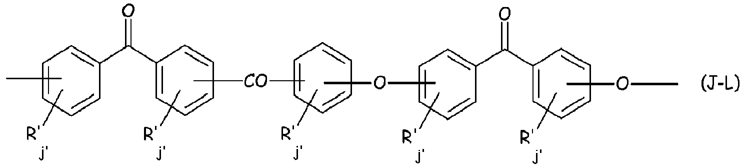 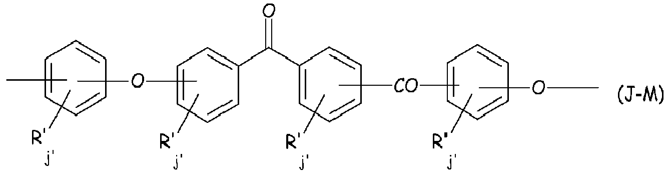 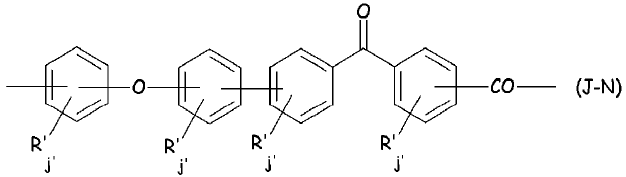 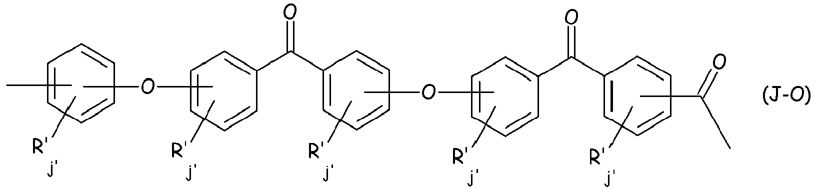 wherein :
- each of R', equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium ;
- j' is zero or is an integer from 0 to 4.

In recurring unit (R_{PAEK}), the respective phenylene moieties may independently have 1,2-, 1,4- or 1,3 -linkages to the other moieties different from R' in the recurring unit. Preferably, said phenylene moieties have 1,3-or 1,4- linkages, more preferably they have 1,4-linkage.

Still, in recurring units (R_{PAEK}), j' is at each occurrence zero, that is to say that the phenylene moieties have no other substituents than those enabling linkage in the main chain of the polymer.

Preferred recurring units (R_{PAEK}) are thus selected from those of formulae (J'-A) to (J'-O) herein below :

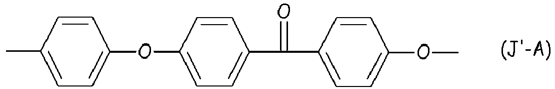

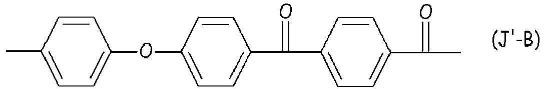

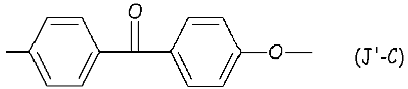

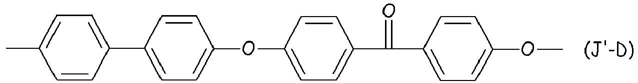

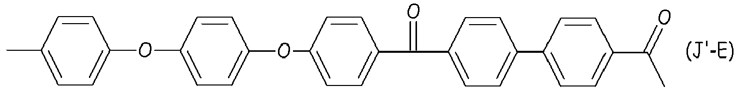

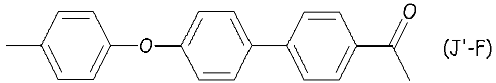

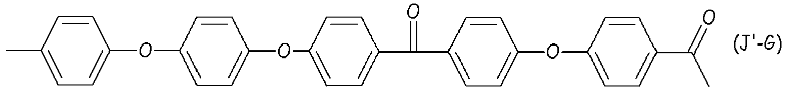

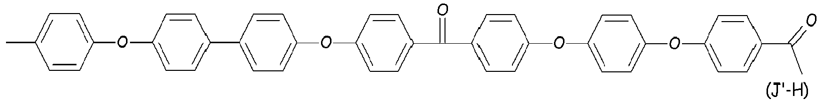

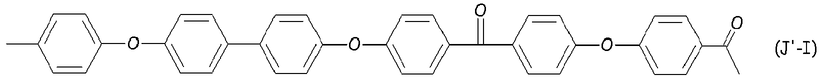

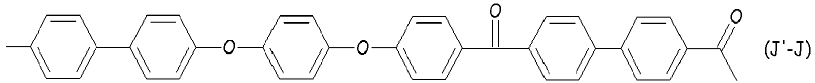

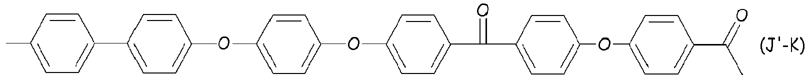

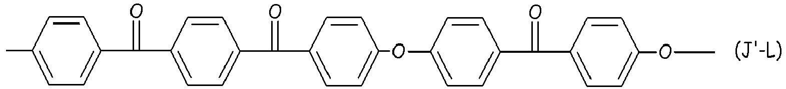

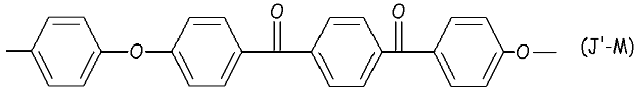

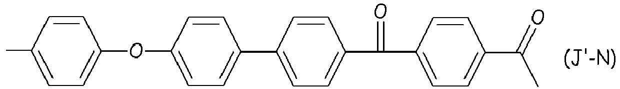

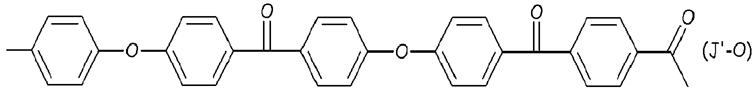

In the (PAEK) polymer, as detailed above, preferably more than 60 %, more preferably more than 80 %, still more preferably more than 90 % moles of the recurring units are recurring units (R_{PAEK}), as above detailed.

Still, it is generally preferred that substantially all recurring units of the (PAEK) polymer are recurring units (R_{PAEK}), as detailed above ; chain defects, or very minor amounts of other units might be present, being understood that these latter do not substantially modify the properties of (Rp_{AEK}).

The (PAEK) polymer may be notably a homopolymer, a random, alternate or block copolymer. When the (PAEK) polymer is a copolymer, it may notably contain (i) recurring units (R_{PAEK}) of at least two different formulae chosen from formulae (J-A) to (J-O), or (ii) recurring units (R_{PAEK}) of one or more formulae (J-A) to (J-O) and recurring units (R*_{PAEK}) different from recurring units (R_{PAEK}).

As will be detailed later on, the (PAEK) polymer may be a polyetheretherketone polymer [(PEEK) polymers, herein after]. Alternatively, the (PAEK) polymer may be a polyetherketoneketone polymer [(PEKK) polymer, herein after], a polyetherketone polymer [(PEK) polymer, hereinafter], a polyetheretherketoneketone polymer [(PEEKK) polymer, herein after], or a polyetherketoneetherketoneketone polymer [(PEKEKK) polymer, herein after].

The (PAEK) polymer may also be a blend composed of at least two different (PAEK) polymers chosen from the group consisting of (PEKK) polymers, (PEEK) polymers, (PEK) polymers and (PEKEKK) polymers, as above detailed.

For the purpose of the present invention, the term "(PEEK) polymer" is intended to denote any polymer of which more than 50 % by moles of the recurring units are recurring units (R_{PAEK}) of formula J'-A.

Preferably more than 75 % by moles, preferably more than 85 % by moles, preferably more than 95 % by moles, preferably more than 99 % by moles of the recurring units of the (PEEK) polymer are recurring units of formula J'-A. Most preferably all the recurring units of the (PEEK) polymer are recurring units of formula J'-A.

For the purpose of the present invention, the term "(PEKK) polymer" is intended to denote any polymer of which more than 50 % by moles of the recurring units are recurring units (R_{PAEK}) of formula J'-B.

Preferably more than 75 % by moles, preferably more than 85 % by moles, preferably more than 95 % by moles, preferably more than 99 % by moles of the recurring units of the (PEKK) polymer are recurring units of formula J'-B. Most preferably all the recurring units of the (PEKK) polymer are recurring units of formula J'-B.

For the purpose of the present invention, the term "(PEK) polymer" is intended to denote any polymer of which more than 50 % by moles of the recurring units are recurring units (R_{PAEK}) of formula J'-C.

Preferably more than 75 % by moles, preferably more than 85 % by moles, preferably more than 95 % by moles, preferably more than 99 % by moles of the recurring units of the (PEK) polymer are recurring units of formula J'-C. Most preferably all the recurring units of the (PEK) polymer are recurring units of formula J'-C.

For the purpose of the present invention, the term "(PEEKK) polymer" is intended to denote any polymer of which more than 50 % by moles of the recurring units are recurring units (R_{PAEK}) of formula J'-M.

Preferably more than 75 % by moles, preferably more than 85 % by moles, preferably more than 95 % by moles, preferably more than 99 % by moles of the recurring units of the (PEEKK) polymer are recurring units of formula J'-M. Most preferably all the recurring units of the (PEEKK) polymer are recurring units of formula J'-M.

For the purpose of the present invention, the term "(PEKEKK) polymer" is intended to denote any polymer of which more than 50 % by moles of the recurring units are recurring units (R_{PAEK}) of formula J'-L.

Preferably more than 75 % by moles, preferably more than 85 % by moles, preferably more than 95 % by moles, preferably more than 99 % by moles of the recurring units of the (PEKEKK) polymer are recurring units of formula J'-L. Most preferably all the recurring units of the (PEKEKK) polymer are recurring units of formula J'-L.

Excellent results were obtained when the (PAEK) polymer was a (PEEK) homopolymer, i.e. a polymer of which substantially all the recurring units of the (PEEK) polymer are recurring units of formula J'-A, wherein chain defects, or very minor amounts of other units might be present, being understood that these latter do not substantially modify the properties of the (PEEK) homopolymer.

Non limitative examples of commercially available polyaryletherketone (PAEK) resins suitable for the invention include the KETASPIRE^{®} polyetheretherketone commercially available from Solvay Specialty Polymers USA, LLC.

The (PAEK) polymer can have an inherent viscosity (IV) of at least 0.50 dl/g, preferably at least 0.60 dl/g, more preferably at least 0.70 dl/g, as measured in 95-98 % sulfuric acid (d= 1.84 g/ml) at a (PAEK) polymer concentration of 0.1 g/100 ml.

The IV of the (PAEK) polymer can notably be equal to or less than 1.40 dl/g, preferably equal to or less than 1.30 dl/g, more preferably equal to or less than 1.20 dl/g, most preferably equal to or less than 1.15 dl/g, as measured in 95-98 % sulfuric acid (d= 1.84 g/ml) at a (PAEK) polymer concentration of 0.1 g/100 ml.

Good results have been obtained with (PAEK) polymers having an IV from 0.70 dl/g to 1.15 dl/g, as measured in 95-98 % sulfuric acid (d= 1.84 g/ml) at a (PAEK) polymer concentration of 0.1 g/100 ml.

The measurement is generally performed using a No 50 Cannon-Fleske viscometer; IV is measured at 25°C in a time less than 4 hours after dissolution.

The (PAEK) polymer has a melt viscosity of advantageously at least 0.05 kPa.s, preferably at least 0.08 kPa.s, more preferably at least 0.1 kPa.s, still more preferably at least 0.12 kPa.s at 400°C and a shear rate of 1000 s⁻¹, as measured using a capillary rheometer in accordance with ASTM D3835.

As capillary rheometer, a Kayeness Galaxy V Rheometer (Model 8052 DM) can be used.

The PAEK polymer has a melt viscosity of advantageously at most 1.00 kPa.s, preferably at most 0.80 kPa.s, more preferably at most 0.70 kPa.s, even more preferably at most 0.60 kPa.s at 400°C and a shear rate of 1000 s⁻¹, as measured using a capillary rheometer in accordance with ASTM D3835.

The (PAEK) polymer can be prepared by any method known in the art for the manufacture of poly(aryl ether ketone)s.

The weight of the (PAEK) polymer in the polymeric material, based on the total weight of the (PEI) polymer and the (PAEK) polymer, is advantageously equal to or above 20 %, preferably equal to or above 30 %, more preferably equal to or above 35 %, most preferably equal to or above 40 %. On the other hand, the weight of the (PAEK) polymer, based on the total weight of the (PEI) polymer and the (PAEK) polymer, is advantageously equal to or below 70 %, preferably equal to or below 60 %, more preferably equal to or below 55 %, even more preferably equal to or below 50 %.

Very good results were obtained when the polymeric material comprised the (PAEK) polymer in an amount of 20 - 60 wt. % based on the total weight of the (PEI) polymer and the (PAEK) polymer.

Excellent results were obtained when the polymeric material comprised the (PAEK) polymer in an amount of 30 - 50 wt. % based on the total weight of the (PEI) polymer and the (PAEK) polymer.

The Applicant has now found that the presence of the (PAEK) polymer in the composition (C) has improved especially at high temperature the maintenance of the shape of the aerospace article parts and finished aerospace articles.

### The polymeric material

In a preferred embodiment of the present invention, the polymeric material is a phase separated polymeric material.

For the purpose of the present invention, the term "phase separated polymeric material" is intended to mean that the (PEI) polymer, as detailed above and the (PAEK) polymer, as detailed above, exist in admixture as separate chemical entities that can be distinguished, using standard analytical techniques, for example such as microscopy, differential scanning calorimetry or dynamic mechanical analysis, to show a least two distinct polymeric phases one of which mainly comprises the (PEI) polymer, as detailed above and one of which comprises the (PAEK) polymer, as detailed above.

In one preferred embodiment of the present invention, the at least two distinct polymeric phases in the polymeric material, as described above, are present in an amount of at least 75 wt. %, preferably of at least 80 wt. % and more preferably of at least 90 wt. %, based on the total weight of the polymeric material.

In another embodiment of the present invention, the at least two distinct polymeric phases in the polymeric material, as described above, are present in an amount of at least 5 wt. %, preferably of at least 10 wt. % more preferably of at least 20 wt. %, even more preferably of at least 30 wt. %, most preferably of at least 40 wt. %, based on the total weight of the polymeric material.

In general, the at least two distinct polymeric phases can be present in any specific morphology known in the art, such as notably spherical, perforated layers, cylindrical, lamellar, gyroid, interpenetrated network, and the like.

Thus, in other words, the polymeric material of the present invention may be completely immiscible or may show partial miscibility but preferably the polymeric material behaves such that, at least in the solid state, the blend shows two or mores distinct polymeric phases.

It is generally known that a phase separated polymeric material, as detailed above, has at least two glass transition temperatures (Tg).

The glass transition temperature (Tg) may be measured by Differential Scanning Calorimetry (DSC) according to ASTM D 3418 Standard.

In one embodiment of the present invention, the phase separated polymeric material has two glass transition temperatures Tg1 and Tg2 wherein the difference in absolute value y between Tg1 and Tg2 is at least 50°C, preferably at least 75°C, more preferably at least 90°C.

In another preferred embodiment of the present invention, the polymeric material consists of the (PEI) polymer, as defined above and the (PAEK) polymer, as defined above.

The weight of the polymeric material in the composition (C), based on the total weight of the composition (C), is advantageously equal to or above 40 %, preferably equal to or above 45 %, more preferably equal to or above 50 %. On the other hand, the weight of the polymeric material, based on the total weight of the composition (C), is advantageously equal to or below 95 %, preferably equal to or below 90 %, more preferably equal to or below 70 %, even more preferably equal to or below 65 %.

### The fibrous filler

For the purpose of the present invention, the term " fibrous filler " means a fundamental form of solid (often crystalline) characterized by relative high tenacity and a high ratio of length to diameter.

Preferably, the reinforcing fibrous filler is selected from carbon fibers such as notably graphitic carbon fibers (some of them having possibly a graphite content of above 99 %), amorphous carbon fibers, pitch-based carbon fibers (some of them having possibly a graphite content of above 99 %), PAN-based carbon fibers ; glass fiber ; synthetic polymeric fiber ; aluminum fiber ; aluminum silicate fibers ; oxide of metals of such aluminum fibers ; titanium fiber ; magnesium fiber ; boron carbide fibers ; rock wool fiber ; steel fiber ; asbestos fibers; silicon carbide fibers ; boron fibers, carbon nanotubes (CNT) and the like.

It is understood that the skilled person will easily recognize the fibrous filler which fits best its composition and encompassed end uses. Generally, the reinforcing filler is chosen depending on its chemical nature, its length, diameter, ability to feed nicely in compounding equipment without bridging and surface treatment (notably because good interfacial adhesion between the fibrous filler and the polymer improves the strength and the toughness of the blend).

The fibrous fillers can be in a woven, non-woven, non-crimped, unidirectional or multiaxial textiles or chopped form.

In a preferred embodiment, the fibrous filler is a carbon fiber.

For the purpose of the present invention, the term "carbon fiber" is intended to include graphitized, partially graphitized and ungraphitized carbon reinforcing fibers or a mixture thereof.

The term "graphitized" intends to denote carbon fibers obtained by high temperature pyrolysis (over 2000°C) of carbon fibers, wherein the carbon atoms place in a way similar to the graphite structure.

Carbon fibers useful for the present invention can advantageously be obtained by heat treatment and pyrolysis of different polymer precursors such as, for example, rayon, polyacrylonitrile (PAN), aromatic polyamide or phenolic resin ; carbon fibers useful for the present invention may also be obtained from pitchy materials.

Carbon fibers useful for the present invention are preferably chosen from the group composed of PAN-based carbon fibers (PAN-CF), pitch based carbon fibers, graphitized pitch-based carbon fibers, and mixtures thereof.

PAN-based carbon fibers (PAN-CF) have advantageously a diameter of between 3 to 20 µm, preferably from 4 to 15 µm, more preferably from 5 to 10 µm, most preferably from 6 to 8 µm. Good results were obtained with PAN-based carbon fibers (PAN-CF) having a diameter of 7 µm.

The PAN-CF maybe of any length. In general, the length of PAN-CF is at least 50 µm.

Graphitized pitch-based carbon fibers are readily available from commercial sources containing at least about 50 % weight graphitic carbon, greater than about 75 % weight graphitic carbon, and up to substantially 100 % graphitic carbon. Highly graphitic carbon fiber particularly suitable for use in the practice of this invention may be further characterized as highly conductive, and such fiber is generally used having a modulus of about 80 to about 120 million pounds per square inch, i.e., million lbs/in² (MSI). In certain embodiments the highly graphitic carbon fiber has a modulus of about 85 to about 120 MSI, and in other certain embodiments about 100 to about 115 MSI.

The pitch-based-CF has advantageously a diameter between 5 to 20 µm, preferably from 7 to 15 µm, more preferably from 8 to 12 µm.

The pitch-based-CF may be of any length. The pitch-based-CF has advantageously a length from 1 µm to 1 cm, preferably from 1 µm to 1 mm, more preferably from 5 µm to 500 µm and still more preferably from 50 to 150 µm.

Carbon fiber may be employed as a continuous fiber, in particular unidirectional or cross-ply continuous fiber, woven tows of fibers, a chopped carbon fiber or in a particulate form such as may be obtained by milling or comminuting the fiber.

Alternatively, other types of continuous fiber systems based on woven cloth, which provides reinforcement in two orthogonal directions, or non-crimp fabrics can be suitable for use in the practice of the invention.

Comminuted graphitized pitch-based carbon fiber suitable for use in the practice of the invention may be obtained from commercial sources including from Cytec Carbon Fibers as ThermalGraph DKD X and CKD X grades of pitch-based carbon fiber and Mitsubishi Carbon Fibers as Dialead carbon fibers. Chopped PAN-based carbon fibers preferably used in the present invention may be obtained from commercial sources.

In another embodiment, the fibrous filler is a glass fiber.

Glass fibers are made from silica-based glass compounds that contain several metal oxides which can be tailored to create different types of glass. The main oxide is silica in the form of silica sand ; the other oxides such as calcium, sodium and aluminium are incorporated to reduce the melting temperature and impede crystallization. Glass fibers may have a round cross-section or a non-circular cross-section (so called "flat glass fibers"), including oval, elliptical or rectangular. The glass fibers may be added as endless fibers or as chopped glass fibers. In particular the glass fiber, has a diameter preferably below 40 µm, more preferably, its diameter is below 20 µm, and still more preferably below 15 µm. On the other hand, the diameter of the glass fiber, is preferably above 5 µm.

All glass fiber types, such as A, C, D, E, M, S-2, R, T glass fibers (as described in chapter 5.2.3, pages 43-48 of Additives for Plastics Handbook, 2nd ed, John Murphy), or any mixtures thereof or mixtures thereof may be used. For example, R, S and S2 and T glass fibers are high modulus glass fibers that have typically an elastic modulus of at least 76, preferably at least 78, more preferably at least 80, and most preferably at least 82 GPa as measured according to ASTM D2343.

E, R, S and S-2 and T glass fibers are well known in the art. They are notably described in Fiberglass and Glass Technology, Wallenberger, Frederick T. ; Bingham, Paul A. (Eds.), 2010, XIV, chapter 5, pages 197 - 225. R, S and T glass fibers are composed essentially of oxides of silicon, aluminium and magnesium. In particular, those glass fibers comprise typically from 50-75 wt. % of SiO₂, from 16-28 wt. % of Al₂O₃ and from 4-14 wt. % of MgO. To the contrary of the regular E-glass fibers widely used in polymer compositions, R, S2 and T glass fibers comprise less than 15 wt. % of CaO.

In one embodiment, the glass fiber has a length preferably of below 20 mm, more preferably below 10 mm. Besides, it has a length of preferably above 1 mm, more preferably above 2 mm.

It is understood that above mentioned length and diameter values of the said fibrous fillers will change upon processing the composition (C) of the present invention.

The weight of fibrous filler in the filler, as detailed above, is advantageously equal to or below 90 wt. %, preferably equal to or below 85 % wt., more preferably equal to or below 80 wt. %, most preferably equal to or below 75 wt. %, based on the total weight of the filler.

The weight of fibrous filler in the filler, as detailed above, is advantageously equal to or more than 15 wt. %, preferably equal to or more than 30 wt. %, more preferably equal to or more than 40 wt. %, even more preferably equal to or more than 50 wt. %, most preferably equal to or more than 60 wt. %, based on the total weight of the filler.

Preferably, the fibrous filler is present in the filler in an amount ranging from 30 to 90 wt. %, preferably from 40 to 90 wt. %, preferably from 50 to 85 % wt., most preferably from 60 to 80 wt. %, based on the total weight of the filler.

### The mineral filler

Preferably, the mineral filler is selected from nitrides [(NI), herein after] talc, mica, titanium dioxide, kaolin, calcium carbonate, calcium silicate, magnesium carbonate, wollastonite, graphite powders, nano-clays such as notably montmorillonite.

Within the context of the present invention the mention "at least one nitride (NI)" is intended to denote one or more than one nitride (NI). Mixtures of nitrides (NI) can be advantageously used for the purposes of the invention.

For the purpose of the present invention, an "element" is intended to denote an element from the Periodic Table of the Elements.

The value of the electronegativity of an element that are to be taken into consideration for the purpose of the present invention are those reported in the Periodic Table of the Elements edited by J. Breysem, c/o VEL s.a., "Produits, appareillage et fournitures pour le laboratoire", printed in Belgium in February 1987.

Non limitative examples of nitrides (NI) of an element having an electronegativity (ε) of from 1.3 to 2.5 are listed « Handbook of Chemistry and Physics », CRC Press, 64^{th} edition, pages B-65 to B-158. The code into brackets is the one attributed by the CRC Handbook to the concerned nitride, while ε denotes the electronegativity of the element from which the nitride is derived. Then, nitrides (NI) of an element having an electronegativity (ε) of from 1.3 to 2.5 suitable to the purpose of the present invention are notably aluminum nitride (A1N, a45, ε=1.5), antimony nitride (SbN, a271, ε=1.9), beryllium nitride (Be₃N₂, b123, ε=1.5), boron nitride (BN, b203, ε=2.0), chromium nitride (CrN, c406, ε=1.6), copper nitride (Cu₃N, c615, ε=1.9), gallium nitride (GaN, g41, ε=1.6), trigermanium dinitride (Ge₃N₂, g82, ε=1.8), trigermanium tetranitride (Ge₃N₄, g83, ε=1.8), hafnium nitride (HfN, h7, ε=1.3), iron nitrides like Fe₄N (i151, ε=1.8) and Fe₂N or Fe₄N₂ (i152, ε=1.8), mercury nitride (Hg₃N₂, m221, ε=1.9), niobium nitride (n109, ε=1.6), silicium nitride (Si₃N₄, s109, ε=1.8), tantalum nitride (TaN, t7, ε=1.5), titanium nitride (Ti₃N₄, t249, ε=1.5), wolfram dinitride (WN₂, t278, ε=1.7), vanadium nitride (VN, v15, ε=1.6), zinc nitride (Zn₃N₂, z50, ε=1.6) and zirconium nitride (ZrN, z105, ε=1.4).

The nitride (NI) is a nitride of an element having an electronegativity of preferably at least 1.6, and more preferably at least 1.8. In addition, the nitride (NI) is the nitride of an element having an electronegativity of preferably at most 2.2.

Besides, the nitride (NI) is chosen preferably from nitrides of an element chosen from Groups IIIa, IVa, IVb, Va, Vb, VIa, VIb, VIIb and VIII of the Periodic Table of the Elements, and more preferably from nitrides of an element of Group IIIa of the Periodic Table of the Elements.

The most preferred nitride (NI) is boron nitride.

The Applicant has surprisingly found that the presence of a mineral filler, as described above, in particular boron nitride, is effective in boosting the tensile and flexural modulus of the composition (C) and that over a broad temperature range from 10 until 330°C while maintaining all the excellent properties of an fibrous filled (PEI)/(PAEK) mixture, thereby offering said composition (C) of the invention superior high temperature mechanical properties which allows them to be very useful as being comprised in parts of aerospace articles.

The average particle size of the nitride (NI) is advantageously equal to or below 30 µm, preferably equal to or below 20 µm, more preferably equal to or below 18 µm, more preferably equal to or below 15 µm.

The average particle size of the nitride (NI) is preferably equal to or at least 0.05 µm, equal to or at least 0.1 µm, more preferably equal to or at least 0.2 µm, equal to or at least 1 µm.

The average particle size of the nitride (NI) is preferably from 1 µm to 20 µm, more preferably from 2 µm to 18 µm, more preferably from 2 µm to 15 µm.

An average particle size of the nitride (NI) of about 2.5 µm gave particularly good results.

The average particle size of the nitride (NI) is measured via light scattering techniques (dynamic or laser) using the respective equipment coming for example from the company Malvern (Mastersizer Micro or 3000) or using screen analysis according to DIN 53196.

The weight of the mineral filler in the filler, as detailed above, is advantageously equal to or below 80 wt. %, preferably equal to or below 70 wt. %, more preferably equal to or below 60 wt. %, even more preferably equal to or below 50 wt. %, most preferably equal to or below 40 wt. %, based on the total weight of the filler.

The weight of the mineral filler in the filler, as detailed above, is advantageously equal to or more than 10 wt. %, preferably equal to or more than 15 wt. %, more preferably equal to or more than 20 wt. %, even more preferably equal to or more than 25 wt. %, most preferably equal to or more than 30 wt. %, based on the total weight of the filler.

Preferably, the mineral filler is present in the filler in an amount ranging from 10 to 60 wt. %, more preferably from 15 to 50 wt. %, most preferably from 20 to 40 wt. %, based on the total weight of the filler.

### The filler

In another preferred embodiment of the present invention, the filler consists of the fibrous filler, as defined above and the mineral filler, as defined above.

The weight of the filler in the composition (C), based on the total weight of the composition (C), is advantageously equal to or above 10 %, preferably equal to or above 20 %, more preferably equal to or above 30 %. On the other hand, the weight of the filler, based on the total weight of the composition (C), is advantageously equal to or below 60 %, preferably equal to or below 55 %, more preferably equal to or below 50 %, even more preferably equal to or below 45 %.

### The Composition (C)

The composition (C) may further optionally comprise one or more than one additional ingredient (I) generally selected from the group consisting of (i) colorants such as notably a dye (ii) pigments such as notably titanium dioxide, zinc sulfide and zinc oxide (iii) light stabilizers, e.g. UV stabilizers (iv) heat stabilizers (v) antioxidants such as notably organic phosphites and phosphonites, (vi) acid scavengers (vii) processing aids (viii) nucleating agents (ix) internal lubricants and/or external lubricants (x) flame retardants (xi) smoke-suppressing agents (x) anti-static agents (xi) anti-blocking agents (xii) conductivity additives such as notably carbon black and carbon nanofibrils.

When one or more than one additional ingredient (I) are present, their total weight, based on the total weight of composition (C), is usually below 20 %, preferably below 10 %, more preferably below 5 % and even more preferably below 2 %.

The composition (C) of the invention is preferably consisting essentially of the polymeric material, as detailed above, the filler, as detailed above, and optionally, one or more than one additional ingredient (I), as detailed above.

For the purpose of the present invention, the expression "consisting essentially of" is to be understood to mean that any additional component different from the polymeric material, as detailed above, the filler, as detailed above, and optionally, one or more than one additional ingredient (I), as detailed above, is present in an amount of at most 1 % by weight, based on the total weight of the composition (C), so as not to substantially alter advantageous properties of the composition.

Thus, the Applicant has found that the composition (C) provides for significantly improved tensile and flexural modulus of the aerospace article parts and finished aerospace articles.

The composition (C) can be prepared by a variety of methods involving intimate admixing of the at least one (PEI) polymer, the at least one (PAEK) polymer, the at least one fibrous filler, the at least one mineral filler, and optionally the at least one additional ingredient (I) desired in the composition (C), for example by dry blending, suspension or slurry mixing, solution mixing, melt mixing or a combination of dry blending and melt mixing.

Typically, the dry blending of the (PEI) polymers, as detailed above, the (PAEK) polymers, as detailed above, the fibrous filler, as detailed above, the mineral filler as detailed above, and optionally the additional ingredient (I) is carried out by using high intensity mixers, such as notably Henschel-type mixers and ribbon mixers so as to obtain a physical mixture, in particular a powder mixture of the at least one (PEI) polymer, the at least one (PAEK) polymer, the at least one fibrous filler, the at least one mineral filler, and optionally the at least one additional ingredient (I).

Alternatively, the intimate admixing of the at least one (PEI) polymer, the at least one (PAEK) polymer, the at least one fibrous filler, the at least one mineral filler, and optionally the at least one additional ingredient (I) desired in the composition (C) is carried out by tumble blending based on a single axis or multi-axis rotating mechanism so as to obtain a physical mixture. Alternatively, the slurry mixing of the at least one (PEI) polymer, the at least one (PAEK) polymer, the at least one fibrous filler, the at least one mineral filler, and optionally the at least one additional ingredient (I) desired in the composition (C) is carried out by first slurrying said (PEI) polymer and (PAEK) polymer, both in powder form, with the fibrous filler, with the mineral filler and optionally the additional ingredient (I) using an agitator in an appropriate liquid, followed by filtering the liquid away, so as to obtain a powder mixture of of the at least one (PEI) polymer, the at least one (PAEK) polymer, the at least one fibrous filler, the at least one mineral filler, and optionally the at least one additional ingredient (I).

In another embodiment, the solution mixing of the at least one (PEI) polymer, the at least one (PAEK) polymer, the at least one fibrous filler, the at least one mineral filler, and optionally the at least one additional ingredient (I) desired in the composition (C) is carried out by dissolving said (PEI) polymer and (PAEK) polymer, both in powder form, with the fibrous filler, with the mineral filler and optionally the additional ingredient (I) using an agitator in an appropriate solvent or solvent blends is most preferred.

Following the physical mixing step by one of the aforementioned techniques, the physical mixture, in particular the obtained powder mixture, of the at least one (PEI) polymer, the at least one (PAEK) polymer, the at least one fibrous filler, the at least one mineral filler and optionally the at least one additional ingredient (I) is typically melt fabricated by known methods in the art including notably melt fabrication processes such as compression molding, injection molding, extrusion and the like, to provide the above described part of aerospace article or a finished aerospace article.

So obtained physical mixture, in particular the obtained powder mixture can comprise the at least one (PEI) polymer, the at least one (PAEK) polymer, the at least one fibrous filler, the at least one mineral filler, and optionally the at least one additional ingredient (I) in the weight ratios as above detailed, or can be a concentrated mixture to be used as masterbatch and diluted in further amounts of the at least one (PEI) polymer, the at least one (PAEK) polymer, the at least one fibrous filler, the at least one mineral filler, and optionally the at least one additional ingredient (I) in subsequent processing steps. For example, the obtained physical mixture can be extruded into a stock shape like a slab or rod from which a final part can be machined. Alternatively, the physical mixture can be compression molded into a finished part of the aerospace article or into a stock shape from which a finished part of the aerospace article can be machined.

It is also possible to manufacture the composition (C) of the invention by further melt compounding the powder mixture as above described. As said, melt compounding can be effected on the powder mixture as above detailed, or directly on the at least one (PEI) polymer, the at least one (PAEK) polymer, the at least one fibrous filler, the at least one mineral filler, and optionally the at least one additional ingredient (I). Conventional melt compounding devices, such as co-rotating and counter-rotating extruders, single screw extruders, co-kneaders, disc-pack processors and various other types of extrusion equipment can be used. Preferably, extruders, more preferably twin screw extruders can be used.

If desired, the design of the compounding screw, e.g. flight pitch and width, clearance, length as well as operating conditions will be advantageously chosen so that sufficient heat and mechanical energy is provided to advantageously fully melt the powder mixture or the ingredients as above detailed and advantageously obtain a homogeneous distribution of the different ingredients. Provided that optimum mixing is achieved between the bulk polymer and filler contents. It is advantageously possible to obtain strand extrudates which are not ductile of the composition (C) of the invention. Such strand extrudates can be chopped by means e.g. of a rotating cutting knife after some cooling time on a conveyer with water spray. Thus, for example the composition (C) which may be present in the form of pellets or beads can then be further used for the manufacture of the above described part of the aerospace article.

Another objective of the present invention is to provide a method for the manufacture of the above described part of the aerospace article. Such method is not specifically limited. The composition (C) may be generally processed by injection molding, extrusion or other shaping technologies.

In one embodiment of the present invention, the method for the manufacture of the above described part of the aerospace article or aerospace article includes the step of injection molding and solidification of the composition (C).

In another embodiment, the method for the manufacture of the above described part of the aerospace article or aerospace article includes the step of coating.

For example, the composition (C) can be applied to a wire as a coating by using any suitable coating method, preferably by extrusion coating around a wire to form a coated wire, such as notably disclosed in U.S. Pat. No. 4,588,546.

Techniques for manufacturing wire coatings are well known in the art.

In another embodiment of the present invention, the method for the manufacture of the above described part of the aerospace article or the finished aerospace article, as described above includes the machining of a standard shaped structural part in a part having any type of size and shape. Non limiting examples of said standard shaped structural part include notably a plate, a rod, a slab and the like. Said standard shaped structural parts can be obtained by extrusion or injection molding of the composition (C).

The Applicant has now found that said aerospace article parts and finished aerospace article comprising the composition (C) of the present invention have excellent mechanical properties, in particular having a superior stiffness over a broad range of temperature (i.e. from about 25°C until 330°C), good processability, high chemical resistance, high thermal resistance and long term thermal stability. Thus said articles can be employed successfully in the aerospace manufacturing activities requiring the above mentioned severe operating conditions of high temperature, high pressure, harsh chemicals and other extreme conditions while at the same time having a more cost effective article fabrication.

The invention will be now described in more details with reference to the following examples, whose purpose is merely illustrative and not intended to limit the scope of the invention.

### Raw materials

KetaSpire^{®} KT-880 NT, a PEEK (Polyetheretherketone), commercially available from SOLVAY SPECIALTY POLYMERS USA, LLC.
KetaSpire^{®} KT-820 NT, a PEEK (Polyetheretherketone), commercially available from SOLVAY SPECIALTY POLYMERS USA, LLC.
Aurum^{®} polyimide resin PD 450, a (PEI) polymer commercially available from Mitsui Chemicals, Inc.
Aurum^{®} polyimide resin PL6200, a (PEI) polymer commercially available from Mitsui Chemicals, Inc.
Boron Nitride, Boronid^{®}S1-SF commercially available from ESK Ceramics, GmbH, average particle size of 2.5 µm.
Carbon Fiber, Sigrafil^{®} C30 APS 006 from SGL Corporation
Carbon Fiber, ThermalGraph^{®} DKD pitched-based carbon fiber commercially available from Cytec Carbon Fibers

### General procedure for the preparation of compositions of examples 2,4 and the comparative examples C1 and C3

A dry blend of the PEEK polymer, the (PEI) polymer with the desired amounts of Boronid^{®} (as detailed in Table 2) were prepared by first tumble blending for about 30 minutes, and fed into barrel 1 of a 26 mm ZSK-26 extruder, a co-rotating partially intermeshing twin screw extruder having an L/D ratio of 48:1. Said extruder consists of 12 barrel sections. The carbon fiber was fed using a side-stuffer into barrel 7. The compounding details are summarized in Table 1, below :

**Table 1**

| Screw Diameter : 26 mm | | |
|---|---|---|
| Screw Speed : 210-250 rpm | | L/D = 48 |
| **Zone** | **Name** | **Temp. (°C)** |
| 1 | Barrel 1 | 150 |
| 2 | Barrel 2 | 320 |
| 3 | Barrel 3 | 320 |
| 4 | Barrel 4 | 330 |
| 5 | Barrel 5 | 330 |
| 6 | Barrel 6 | 330 |
| 7 | Barrel 7 | 340 |
| 8 | Barrel 8 | 340 |
| 9 | Barrel 9 | 340 |
| 10 | Barrel 10 | 340 |
| 11 | Barrel 11 | 340 |
| 12 | Barrel 12 | 340 |
| 13 | Die plate | 340 |

The extrudate for each formulation was cooled in a water trough and then pelletized using a pelletizer. The thus obtained pellets of the 4 compositions of were next dried for 4 hours in a desiccated air oven at 150°C and subjected to an injection molding process.

### General description of the injection molding process of the compositions

The pellets of each of the compositions, as described above, were injection-molded to produce ASTM test specimens using a Toshiba 150 ton injection molding machine following standard conditions.

Mechanical properties were tested for all the compositions (C) using injection molded 0.125 inch thick ASTM test specimens which consisted of 1) Type I tensile bars, 2) 5 in x 0.5 in x 0.125 in flexural bars, and 3) 4 in x 4 in x 0.125 in plaques for the instrumented impact (Dynatup) testing.

The following ASTM test methods were employed in evaluating all 4 compositions :
- D638 : Tensile properties using a test speed of 0.2 in/min at temperatures of 23°C and 140°C.
- D790 : Flexural properties using a test speed of 0.05 in/min at temperatures of 23°C and 200°C.
- D648 : Heat deflection temperature (HDT).

HDT was measured at an applied stress of 264 psi and using 0.125 in-thick flexural specimens annealed at 300°C for 2 hours to assure uniform crystallinity and removal of residual molded-in stresses in the parts which can otherwise compromise the accuracy of the measurement.

### Crystallinity measurements :

5 in x 0.5 in x 0.125 in flexural bars were prepared from the composition (C) by injection molding as described earlier. The plaque was then annealed at 300°C for 2 hours under air.

The % crystallinity of molded plaques was determined by using DSC, in particular by measuring the enthalpy of fusion on the first heat scan. The melting of the part was taken as the area over a linear baseline drawn from 320°C to a temperature above the last endotherm (typically 410°C). The crystallinity level of the annealed plaque was determined by comparing the measured melting endotherm to the one of a 100 % crystalline material (assumed to be 130 J/g of resin).

Composition, mechanical properties, and physical properties of the four compositions are summarized in Table 2.

**Table 2**

| **Examples** | **C1** | **2** | **C3** | **4** |
|---|---|---|---|---|
| **KetaSpire^{®} KT-880P PEEK (wt. %)** | 28 | 24 | | |
| **KetaSpire^{®} KT-820P PEEK (wt. %)** | | | 28 | 24 |
| **Aurum^{®} PI polyimide PD450 grade (PEI polymer) (wt. %)** | 42 | 36 | | |
| **Aurum^{®} PI polyimide PL6200 grade (PEI polymer) (wt %)** | | | 42 | 36 |
| **Carbon Fiber, SGL^{®}C30 APS 006** | 30 | 30 | | |
| **Carbon Fiber, Pitch ThermalGraph^{®} DKD pitched-based** | | | 30 | 30 |
| **Boron Nitride, Boronid^{®}S1-SF (wt. %)** | 0 | 10 | 0 | 10 |

| **Mechanical properties** | | | | |
|---|---|---|---|---|
| *Tensile properties at 23°C* | | | | |
| Tensile Yield Strength (psi) | 30900 | 27400 | 18500 | 18700 |
| Tensile Modulus (Ksi) | 3480 | 4250 | 2920 | 3590 |
| Tensile Elongation at Break (%) | 1.9 | 1.4 | 1.3 | 1.3 |

| *Tensile properties at 140°C* | | | | |
|---|---|---|---|---|
| Tensile Yield Strength (psi) | 17900 | 16600 | 11500 | 11200 |
| Tensile Modulus (Ksi) | 3130 | 3790 | 2610 | 3110 |
| Tensile Elongation at Break (%) | 1.9 | 1.5 | 2 | 1.9 |

| *Flexural properties at 23°C* | | | | |
|---|---|---|---|---|
| Flexural Modulus (ksi) | 2850 | 3360 | 2500 | 2860 |
| Flexural Strength (psi) | 47200 | 42300 | 24900 | 26000 |
| Flexural Strain at Break (%) | 2.2 | 1.8 | 1.6 | 1.5 |

| *Flexural properties at 200°C* | | | | |
|---|---|---|---|---|
| Flexural Modulus (ksi) | 1220 | 1280 | 443 | 465 |
| Flexural Strength (psi) | 15300 | 14200 | 8860 | 8550 |
| Flexural Strain at Break (%) | 3.4 | 3.5 | | |
| | | | | |

| **Physical properties** | | | | |
|---|---|---|---|---|
| HDT [Annealed 300°C/2h] (°C) | 334 | 331 | 314 | 316 |
| % crystallinity - unannealed | 13.19 % | 15.38 % | 17.9 % | 23.7 % |
| % crystallinity - annealed | 30.8 % | 31.8 % | 33.0 % | 34.6 % |

| | | | | |
|---|---|---|---|---|
| *Dynamic Mechanical Analysis (DMA) measurements* | | | | |

The DMA measurements are carried out according to the ASTM test method D5279 and the resulting data are summarized in Tables 3 and 4.

Rectangular test samples (1.2 cm x 5.1 cm) (Example 2 and comparative example 1) were prepared from injection molded flexural bars and were dried at 120°C under vacuum for 12 hours. Said test samples were then analyzed by Dynamic Mechanical Analysis (DMA) on an TA ARES G2 rheometer under torsion mode (10 rad/s, 0.05 % strain) from 30 to 330°C at 5.0°C/min, in order to measure the storage modulus (G', Pa) at different temperatures, in particular below and above the Tg of 143°C (i.e. Tg of the (PEEK) polymer) and above the Tg of 250°C (i.e. Tg of the (PEI) polymer. The data are summarized in Table 3.

Rectangular test samples (1.2 cm x 5.1 cm) (Example 4 and comparative example 3) were prepared from these molded plaques and were dried at 120°C under vacuum for 12 hours. Said test samples were then analyzed by Dynamic Mechanical Analysis (DMA) on an TA ARES G2 rheometer under torsion mode (10 rad/s, 0.05 % strain) from 50 to 320°C at 5.0°C/min, in order to measure the storage modulus (G', Pa) at different temperatures, in particular below and above the Tg of 143°C (i.e. Tg of the (PEEK) polymer) and above the Tg of 250°C (i.e. Tg of the (PEI) polymer. The data are summarized in Table 4.

**Table 3 : DMA results**

| Ex. | G' at 80°C (Pa) | G' at 140°C (Pa) | G' at 170°C (Pa) | G' at 200°C (Pa) | G' at 260°C (Pa) | G' at 290°C (Pa) | G' at 320°C (Pa) |
|---|---|---|---|---|---|---|---|
| **C1** | 4.28E+09 | 4.08E+09 | 3.16E+09 | 2.66E+09 | 1.45E+08 | 9.03E+08 | 5.00E+07 |
| **2** | 4.95E+09 | 4.59E+09 | 3.68E+09 | 3.01E+09 | 1.53E+08 | 9.96E+08 | 5.55E+07 |

**Table 4 : DMA results**

| Ex. | G' at 90°C (Pa) | G' at 150°C (Pa) | G' at 180°C (Pa) | G' at 210°C (Pa) | G' at 270°C (Pa) | G' at 300°C (Pa) | G' at 330°C (Pa) |
|---|---|---|---|---|---|---|---|
| **C3** | 3.51E+09 | 2.89E+09 | 1.56E+09 | 1.20E+09 | 5.53E+08 | 3.88E+08 | 7.34E+07 |
| **4** | 4.24E+09 | 3.57E+09 | 1.96E+09 | 1.43E+09 | 6.22E+08 | 4.37E+08 | 9.53E+07 |

## Claims

1. An aerospace article comprising at least one part made of a composition [composition (C)] comprising :
i. from 35 to 98 % by weight (wt. %) of a polymeric material, comprising, relative to the total weight of the composition (C) :
- from 25 to 85 wt. % of at least one polyetherimide polymer [(PEI) polymer, herein after], relative to the total weight of the (PEI) polymer and the (PAEK) polymer,
- from 15 to 75 wt. % of at least one polyaryletherketone polymer [(PAEK) polymer, herein after], relative to the total weight of the (PEI) polymer and the (PAEK) polymer; and
ii. from 2 to 65 wt. % of a filler comprising, relative to the total weight of the composition (C) :
- from 5 to 95 wt. % of at least one fibrous filler, relative to the total weight of filler, and
- from 5 to 95 wt. % of at least one mineral filler, relative to the total weight of filler.

2. The aerospace article according to claim 1 wherein more than 50 % of the recurring units of the (PEI) polymer are recurring units (R1) selected from the group consisting of those of formula (XXX) in imide form, their corresponding amic acid forms of formulae (XXXI) and (XXXII), and mixtures thereof : 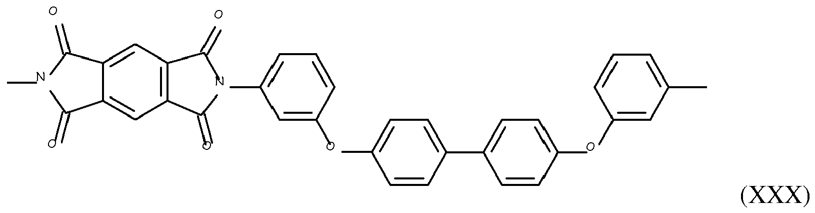 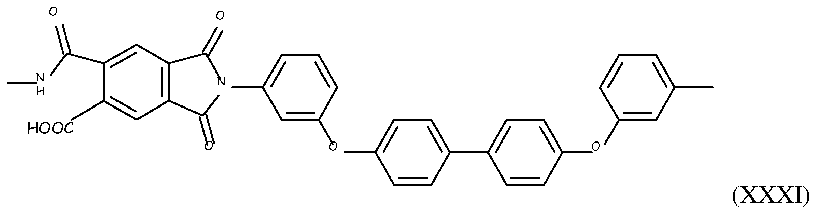 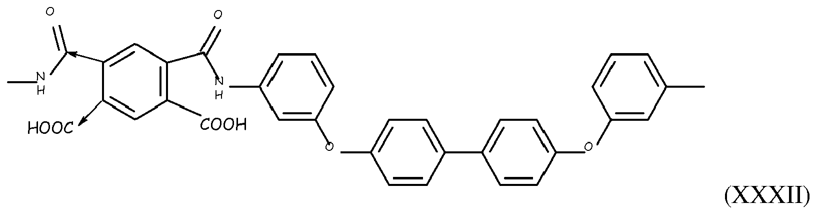 wherein in formulae (XXXII) the → denotes isomerism so that in any recurring unit the groups to which the arrows point may exist as shown or in an interchanged position.

3. The aerospace article according to claim 1 or claim 2 wherein more than 50 % moles of recurring units of (PAEK) polymer are recurring units (R_{PAEK}) selected from those of formulae (J-A) to (J-O), herein below : 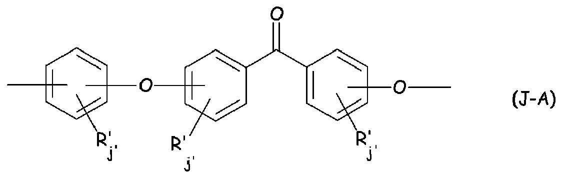 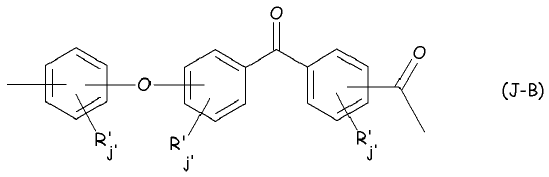 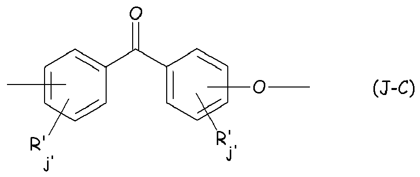 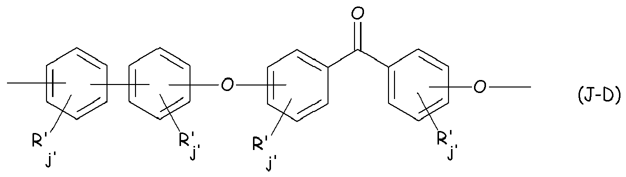 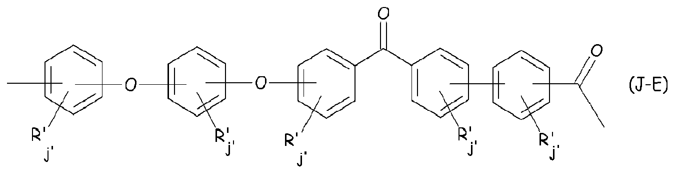 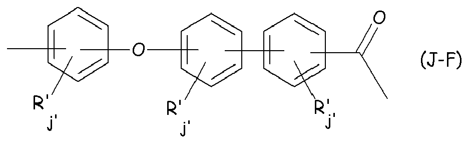 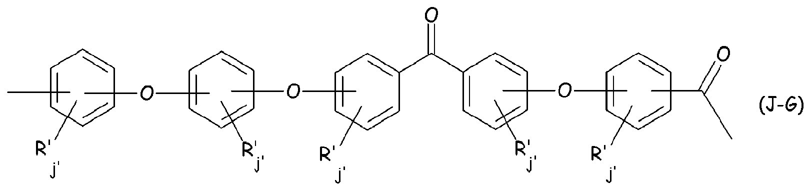 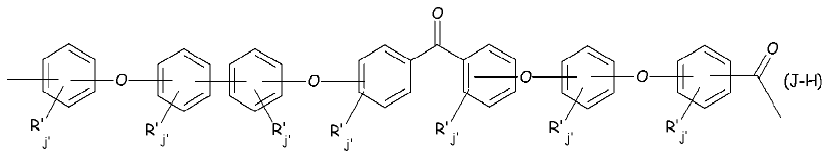 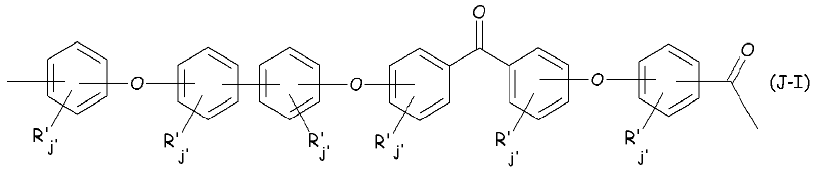 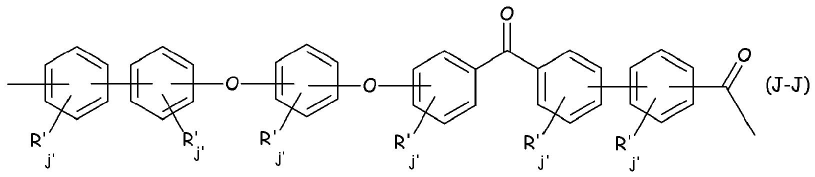 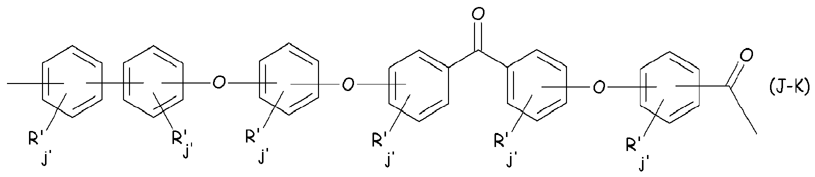 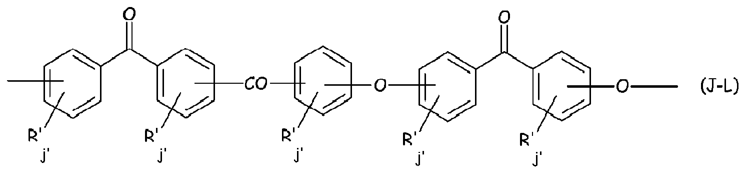 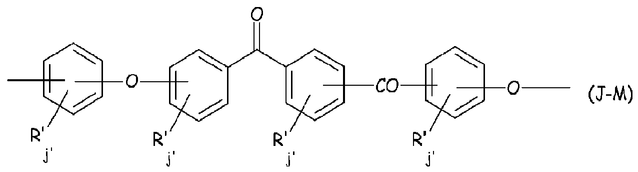 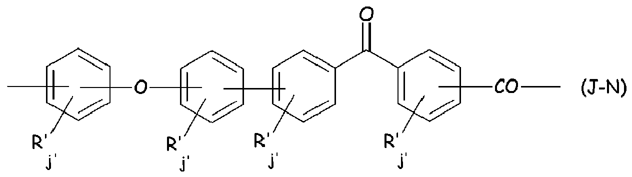 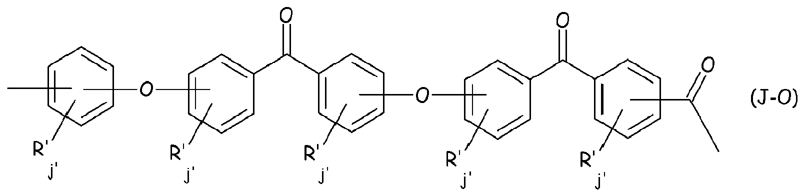 wherein :
- each of R', equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium ;
- j' is zero or is an integer from 0 to 4.

4. The aerospace article according to any one of claims 1 to 3 wherein more than 50 % moles of recurring units of the (PAEK)polymer are recurring units (R_{PAEK}) selected from those of formulae (J'-A) to (J'-O) herein below :

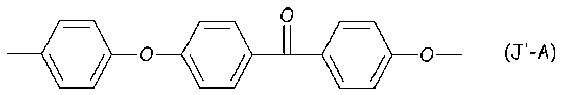

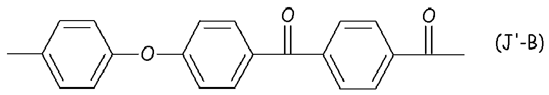

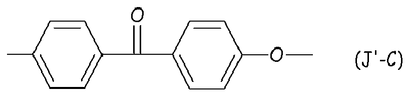

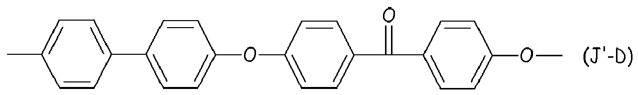

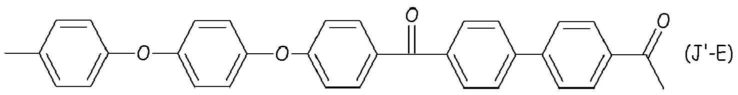

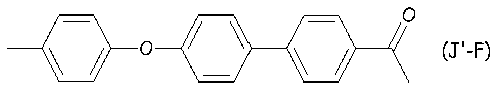

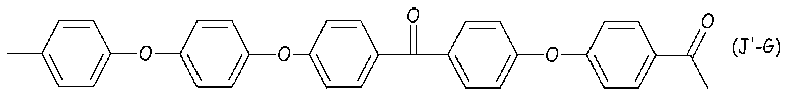

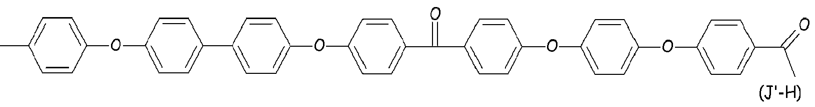

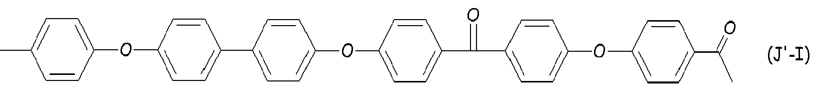

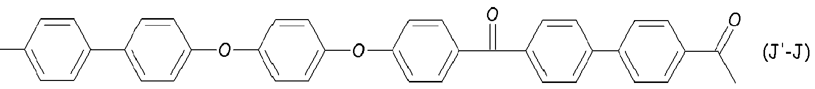

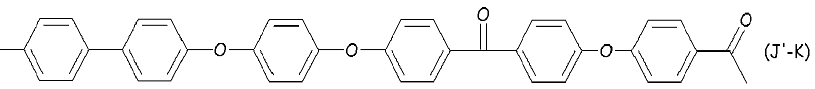

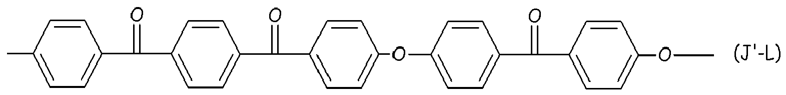

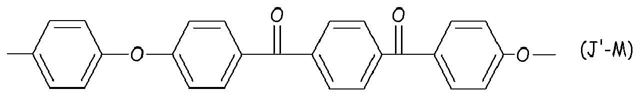

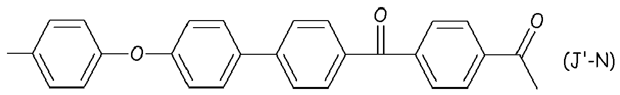

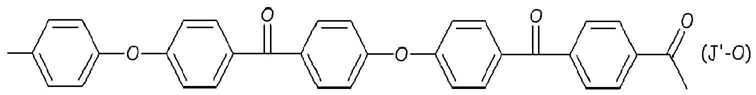

5. The aerospace article according to any one of claims 1 to 4 wherein the polymeric material is a phase separated polymeric material having at least two glass transition temperatures (Tg).

6. The aerospace article according to any one of claims 1 to 5 wherein the fibrous filler is selected from a group consisting of carbon fiber; glass fiber ; synthetic polymeric fiber ; aramid fiber ; aluminum fiber ; aluminum silicate fibers ; oxide of metals of such aluminum fibers ; titanium fiber ; magnesium fiber ; boron carbide fibers ; rock wool fiber ; steel fiber ; asbestos fiber ; silicon carbide fibers ; boron fibers, carbon nanotubes (CNT) and the like.

7. The aerospace article according to any one of claims 1 to 6 wherein the mineral filler is selected from a group consisting of nitrides [(NI), herein after] talc, mica, titanium dioxide, kaolin, calcium carbonate, calcium silicate, magnesium carbonate, wollastonite, graphite powders and nano-clays.

8. The aerospace article according to claim 7 wherein the nitride (NI) is a nitride of an element having an electronegativity of at least 1.6, preferably boron nitride.

9. The aerospace article according to any one of claims 1 to 8 wherein said aerospace article is a wing component, a fairing, a door, an engine cowls, a spoiler, a panel, a frame, a rudder actuator and an interior aircraft component.

10. The aerospace article according to any one of claims 1 to 9, wherein said part is a seal, preferably a seal ring, a fastener, or an electrical connector.

11. The aerospace article according to any one of claims 1 to 9, wherein said part is a coating.

12. A method for the manufacture of a part of the aerospace article or the aerospace article according to anyone of the claims 1 to 11, comprising a step of injection molding, extrusion, or other shaping technologies.

13. The method for the manufacture of a part of the aerospace article or the aerospace article according to claim 12, comprising the step of injection molding and solidification of the composition (C).

14. A method for the manufacture of a part of the aerospace article or the aerospace article according to anyone of the claims 1 to 12, comprising a step of coating, preferably extrusion coating.

15. A composition [composition (C)] comprising :
i. from 35 to 98 % by weight (wt. %) of a polymeric material, comprising, relative to the total weight of the composition (C) :
- from 25 to 85 wt. % of at least one polyetherimide polymer [(PEI) polymer, herein after], relative to the total weight of the (PEI) polymer and the (PAEK) polymer,
- from 15 to 75 wt. % of at least one polyaryletherketone polymer [(PAEK) polymer, herein after], relative to the total weight of the (PEI) polymer and the (PAEK) polymer; and
ii. from 2 to 65 wt. % of a filler comprising, relative to the total weight of the composition (C) :
- from 5 to 95 wt. % of at least one fibrous filler, relative to the total weight of filler, and
- from 5 to 95 wt. % of at least one mineral filler, relative to the total weight of filler, and
wherein more than 50 % of the recurring units of the (PEI) polymer are recurring units (R1) selected from the group consisting of those of formula (XXX) in imide form, their corresponding amic acid forms of formulae (XXXI) and (XXXII), and mixtures thereof : 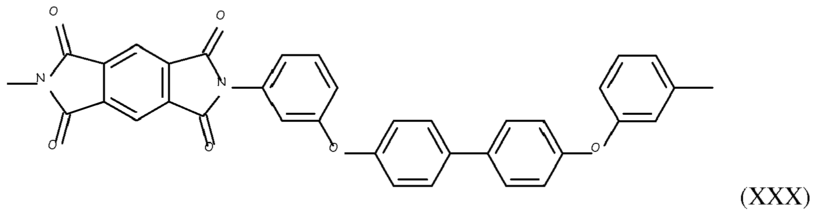 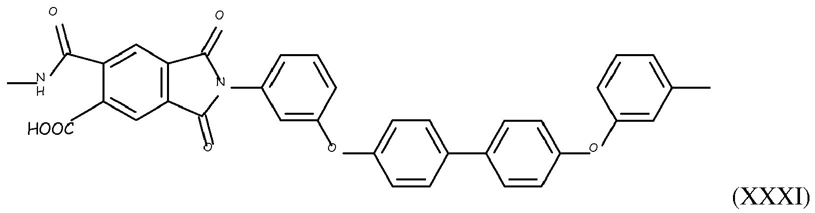 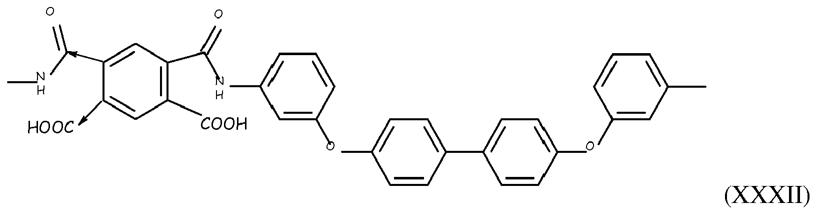 wherein in formulae (XXXII) the → denotes isomerism so that in any recurring unit the groups to which the arrows point may exist as shown or in an interchanged position, and
wherein more than 50 % moles of recurring units of (PAEK) polymer are recurring units (R_{PAEK}) selected from those of formulae (J-A) to (J-O), herein below : 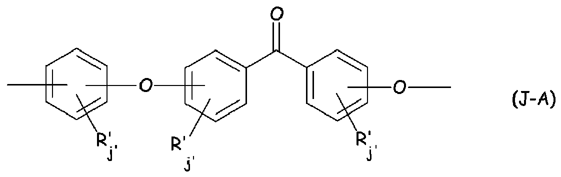 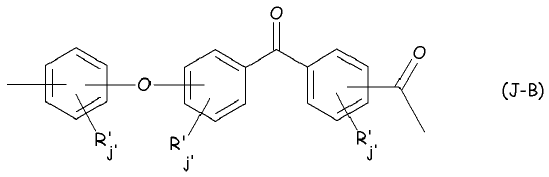 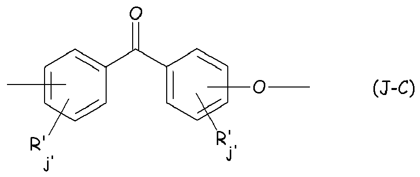 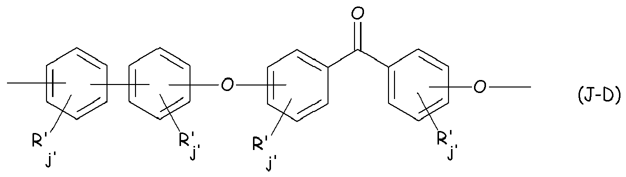 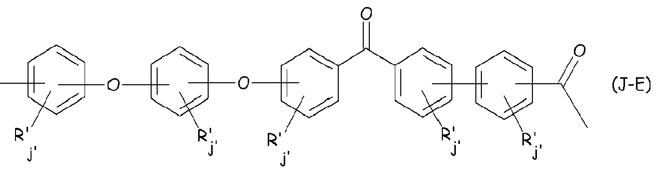 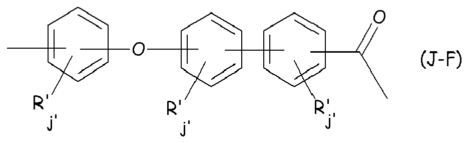 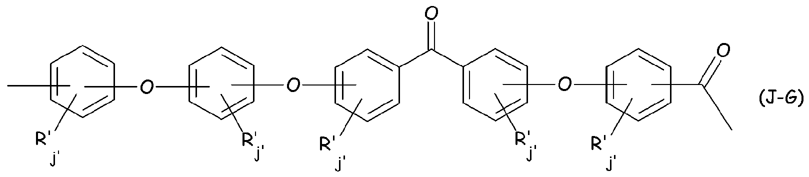 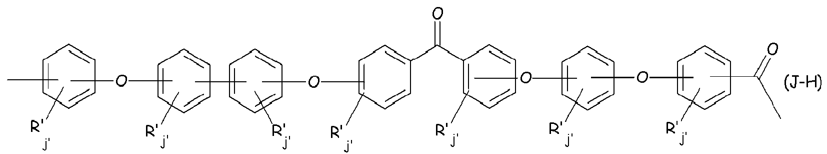 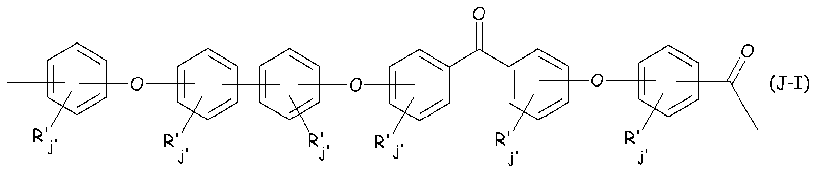 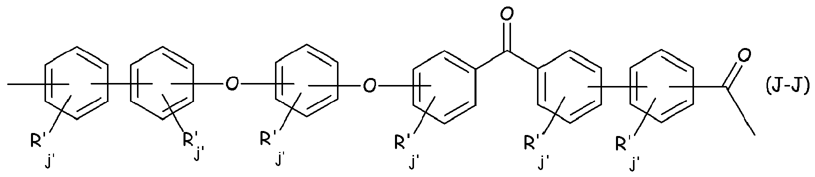 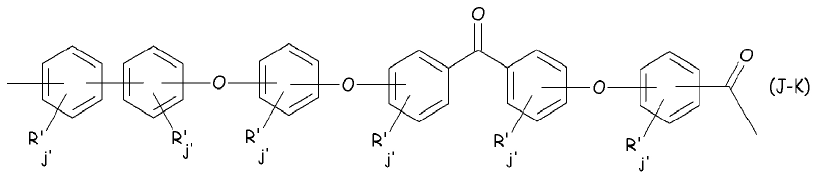 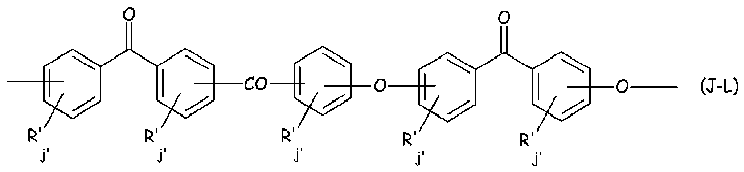 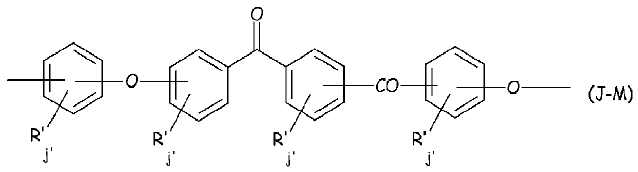 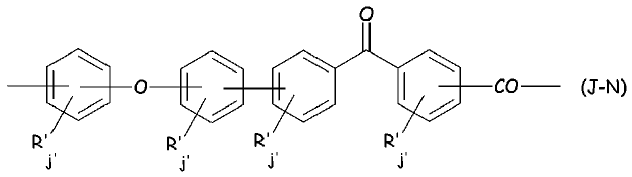 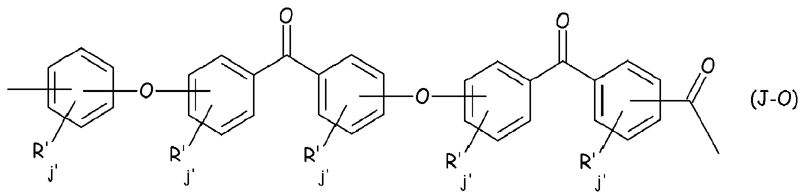 wherein :
- each of R', equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium ; j' is zero or is an integer from 0 to 4.
